# EUROPÄISCHE PATENTSCHRIFT

(11) **EP 4 230 988 B1**
(45) Veröffentlichungstag und Bekanntmachung des Hinweises auf die Patenterteilung: **19.11.2025**
(21) Anmeldenummer: 23156873.4
(22) Anmeldetag: 15.02.2023
(51) Int. Cl.: G01M 5/00, G01M 7/00, G01L 5/00, G01L 5/24, F16B 31/02, E21D 21/02, F16B 13/00, F16B 13/06, F16B 25/00

(54) **MESSELEMENT MIT BEFESTIGUNGSENDE UND BEFESTIGUNGSGEWINDE ZUM BEFESTIGEN AN SENSORISCH ZU CHARAKTERISIERENDEM VERANKERUNGSGRUND**
MEASURING ELEMENT WITH FASTENING THREAD AND FASTENING THREAD FOR FASTENING TO AN ANCHORING BASE TO BE SENSORICALLY IDENTIFIED
ELÉMENT DE MESURE AVEC FILETAGE DE FIXATION ET DE FIXATION POUR FIXATION À UN FOND D'ANCRAGE À CARACTÉRISER SENSORIELLEMENT

(30) Priorität: 16.02.2022 DE 102022103653
(43) Veröffentlichungstag der Anmeldung: 23.08.2023
(73) Patentinhaber: Adolf Würth GmbH & Co. KG, 74653 Künzelsau (DE); Würth International AG, 7000 Chur (CH)
(72) Erfinder: Wolz, Nicolas, 63927 Bürgstadt (DE); Tiedemann, Benjamin, 74653 Künzelsau (DE); Röck, David, 86169 Augsburg (DE); Rosskamp, Heiko, 73099 Adelberg (DE)
(74) Vertreter: Dilg, Haeusler, Schindelmann Patentanwaltsgesellschaft mbH

(56) Entgegenhaltungen:
- EP-A1- 3 279 628
- EP-A1- 3 290 721
- EP-A1- 3 913 344
- WO-A1-2021/010263
- US-A1- 2003 000 314
- US-A1- 2019 203 599
- US-A1- 2022 252 473

## Beschreibung

Die Erfindung betrifft ein Messelement, eine Anordnung und ein Verfahren zum Herstellen eines Messelements.

Es sind verschiedene Befestigungselemente bekannt, die in einem Verankerungsgrund gesetzt werden können, zum Beispiel um ein Bauteil an dem Verankerungsgrund zu befestigen. Beispiele für solche Befestigungselemente sind Holzschrauben, Bolzenanker und Dübel.

DE 10 2009 007 425 B3 offenbart einen Sensorbolzen zur Krafterfassung. Der Sensorbolzen weist ein Sensorelement aus einem Material mit in Abhängigkeit von äußeren Krafteinwirkungen veränderlichen Lichtdurchlasseigenschaften auf, das in einem Lichtstrahlengang zwischen einer Lichtquelle und einem Lichtempfänger angeordnet ist. Das Sensorelement steht mit einer Kraftaufnahmeeinrichtung in mechanischer Wirkverbindung. Das Sensorelement kann zwischen einem Hauptschalenteil und einem Formschalenteil eingelegt werden, das durch Lagerschalen gesichert ist. Durch das Sensorelement wird ein Lichtstrahl einer in einer Endkappe angeordneten Lichtquelle gesendet und von einem in einem Gehäuse angeordneten Lichtempfänger erfasst. Bei einer Belastung des Formschalenteils durch eine äußere Kraft verformt sich der Epoxidkern des Sensorelements und der Lichtdurchlass wird verringert. Die Veränderung des Lichtsignals kann durch den Lichtempfänger erfasst und durch eine nachgeschaltete Signalverarbeitungseinrichtung ausgewertet werden.

DE 10 2014 112 151 B4 offenbart eine elektronische Schraube. Die elektronische Schraube umfasst einen Körper und ein Drehmomentsensorelement. Der Körper umfasst einen Schraubkopf, einen Schaft, welcher mit dem Schraubkopf verbunden ist, und eine Vertiefung, die sich an der Seitenwand des Schafts befindet. Das Drehmomentsensorelement ist in der Vertiefung angeordnet und misst den Drehmomentwert der elektronischen Schraube. Das Drehmomentsensorelement ist elektrisch mit einer elektronischen Drehmomentanzeige verbunden, wobei die elektronische Drehmomentanzeige den durch das Drehmomentsensorelement ermittelten Drehmomentwert anzeigt.

US 2003/000314 A1 offenbart ein Messelement, aufweisend: einen Schaftabschnitt mit einem Befestigungsgewinde; ein erstes Befestigungsende an einem ersten Ende des Schaftabschnitts zum Befestigen in einem Verankerungsgrund; einen zu dem Befestigungsgewinde beabstandet angeordneten Sensor zum Erfassen von Verankerungsdaten des Messelements in dem Verankerungsgrund, wobei der Sensor an einem radial verjüngten Verjüngungsabschnitt des Schaftabschnitts angeordnet ist, wobei der radial verjüngte Verjüngungsabschnitt als ringförmige Aussparung an einer radialen Außenseite des Schaftabschnitts ausgebildet ist; eine Übertragungseinrichtung zum Übertragen der Verankerungsdaten von dem Sensor zu einem externen Empfängergerät und eine innere Schutzeinrichtung zum Schützen des Sensors.

Weitere Messelemente sind bekannt aus WO 2021 010 263 A1, EP 3 279 628 A1, EP 39 133 44 A1, US 2019 203 599 A1 und EP 3 290 721 A1.

Es ist eine Aufgabe der vorliegenden Erfindung, einen Untergrund in einfacher und zuverlässiger Weise charakterisieren zu können.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist ein Messelement geschaffen, aufweisend einen Schaftabschnitt mit mindestens einem Befestigungsgewinde, ein erstes Befestigungsende an einem ersten Ende des Schaftabschnitts zum Befestigen in einem Verankerungsgrund, einen zu dem Befestigungsgewinde beabstandet angeordneten Sensor zum Erfassen von Verankerungsdaten des Messelements in dem Verankerungsgrund, und eine Übertragungseinrichtung zum Übertragen der Verankerungsdaten von dem Sensor zu einem externen Empfängergerät. Der Sensor ist an einem radial verjüngten Verjüngungsabschnitt des Schaftabschnitts axial zwischen dem ersten Befestigungsende und dem zweiten Befestigungsende angeordnet. Das Messelement hat eine Schutzeinrichtung zum Schützen des Sensors, wobei die Schutzeinrichtung umfänglich geschlossen in dem radial verjüngten Verjüngungsabschnitt angeordnet ist und den Sensor schützend bedeckt.

Gemäß einem weiteren Ausführungsbeispiel der vorliegenden Erfindung ist eine Anordnung bereitgestellt, die ein Messelement mit den oben beschriebenen Merkmalen und ein Empfängergerät aufweist, das zum Empfangen von mittels des Sensors erfassten Verankerungsdaten kommunizierfähig mit dem Sensor gekoppelt oder koppelbar ist.

Gemäß noch einem anderen Ausführungsbeispiel der vorliegenden Erfindung ist ein Verfahren zum Herstellen eines Messelements bereitgestellt, wobei das Verfahren ein Ausbilden eines ersten Befestigungsendes - das zum Verankern in einem Verankerungsgrund vorgesehen ist - an einem ersten Ende eines mit mindestens einem Befestigungsgewinde versehenen Schaftabschnitts in einem Verankerungsgrund, ein Anordnen eines zu dem mindestens einen Befestigungsgewinde beabstandeten (d.h. von dem Befestigungsgewinde getrennten) Sensors an dem Messelement zum Erfassen von Verankerungsdaten des Messelements in dem Verankerungsgrund, ein Ausbilden einer Übertragungseinrichtung zum Übertragen der Verankerungsdaten von dem Sensor zu einem externen Empfängergerät und ein Ausbilden einer Schutzeinrichtung zum Schützen des Sensors, aufweist, wobei die Schutzeinrichtung umfänglich geschlossen in dem radial verjüngten Verjüngungsabschnitt angeordnet wird und den Sensor schützend bedeckt. Der Sensor wird an einem radial verjüngten Verjüngungsabschnitt des Schaftabschnitts angeordnet, wobei der radial verjüngte Verjüngungsabschnitt als ringförmige Aussparung an einer radialen Außenseite des Schaftabschnitts ausgebildet wird.

Im Rahmen der vorliegenden Anmeldung kann unter dem Begriff "Verankerungsgrund" insbesondere ein zum Verankern des Messelements geeigneter Untergrund verstanden werden. Ein solcher Verankerungsgrund kann insbesondere eine Wand, weiter insbesondere eine vertikale Wand, sein oder aufweisen. Auch eine Brücke oder ein anderes Bauwerk oder ein Gebäude kann einen Verankerungsgrund darstellen. Es ist auch möglich, dass der Verankerungsgrund durch ein Bauteil gebildet ist, beispielsweise durch ein Verbindungselement oder durch einen Balken. Materialien für einen solchen Verankerungsgrund sind insbesondere Holz oder Holzbaustoffe, oder aber auch Beton- und Mauerwerksbaustoffe, Metall oder Kunststoffbauteile. Ferner kann ein solcher Verankerungsgrund auch ein beliebiger Kompositwerkstoff aus mehreren unterschiedlichen Materialkomponenten sein. Der Verankerungsgrund kann Hohlräume aufweisen oder kann massiv (d.h. von Hohlräumen frei) sein.

Im Rahmen der vorliegenden Anmeldung kann unter dem Begriff "Messelement" insbesondere ein Körper, ein Bauteil oder eine Baugruppe aus mehreren Bauteilen verstanden werden, geeignet zum Verankern an bzw. in einem Verankerungsgrund, um dort sensorisch die Beschaffenheit des Verankerungsgrunds zu charakterisieren. Gemäß einem Ausführungsbeispiel kann ein solches Messelement von einer Befestigungsfunktion und einer Kraftaufnahme weitestgehend frei sein, d.h. eine reine Messfunktion im Verankerungsgrund bereitstellen.

Im Rahmen der vorliegenden Anmeldung kann unter dem Begriff "Schaftabschnitt" insbesondere ein im Wesentlichen zylindrischer, bolzenförmiger oder stabförmiger Körper verstanden werden, der zum Beispiel aus einem Metall oder einem Kunststoff hergestellt sein kann. Ein solcher Schaftabschnitt kann ein hohler oder ein massiver Körper sein, an und/oder in dem einer oder mehrere funktionelle Abschnitte ausgebildet sein.

Im Rahmen der vorliegenden Anmeldung kann unter dem Begriff "erstes Befestigungsende" insbesondere ein Endabschnitt des Schaftabschnitts oder an dem Schaftabschnitt verstanden werden, der zum Verankern in dem Verankerungsgrund funktionell ausgebildet ist. Dies kann das erste Befestigungsende allein (beispielsweise durch ein Befestigungs- oder Verankerungsgewinde oder durch einen Konuskörper mit Spreizhülse) oder in Zusammenwirkung mit mindestens einem anderen Körper oder Element (zum Beispiel einem separaten Spreizkörper oder chemischer Dübelmasse, wie zum Beispiel Mörtel) bewerkstelligen.

Im Rahmen der vorliegenden Anmeldung kann unter dem Begriff "Sensor"' jede funktionelle Entität verstanden werden, mit der Sensorinformation während des Setzens und/oder nach dem Setzen (insbesondere auch lange nach dem Setzen, zum Beispiel Jahre später) des Messelements sensorisch erkennbar und zur Auswertung übermittelbar ist. Zum Beispiel kann ein solcher Sensor eine einstückige Komponente sein, die Sensordaten (insbesondere Verankerungsdaten) erfasst und als Signal (beispielsweise elektrisch, optisch, elektromagnetisch, etc.) weiterleitet. Es ist auch möglich, dass ein Sensor aus mehreren strukturell getrennten, aber funktionell zusammenwirkenden Sensorkomponenten gebildet ist. Sensoren können zum Erfassen von mindestens einem physikalischen und/oder chemischen Parameter ausgebildet sein, zum Beispiel Druck, Temperatur, mechanische Spannung, Drehmoment, Kraft, chemische Umgebung, Untergrundbeschaffenheit, etc. Gemäß einem exemplarischen Ausführungsbeispiel der Erfindung kann als der mindestens eine Sensor zum Beispiel ein Dehnmessstreifen, ein Feuchtigkeitssensor, ein Schwingungssensor, ein Ultraschallsensor, ein induktiver Sensor und/oder ein kapazitiver Sensor eingesetzt werden. Auch optische, elektrische oder elektromagnetische Sensoren sind möglich.

Im Rahmen der vorliegenden Anmeldung kann unter dem Begriff "Verankerungsdaten" insbesondere jeder Parameter verstanden werden, der für einen Verankerungszustand und/oder eine Beschaffenheit des Verankerungsgrunds und/oder für eine entsprechende Änderung über die Zeit hinweg indikative Information bereitstellt. Sensorisch erfasste Verankerungsdaten können über einen oder über mehrere Parameter Aufschluss geben. Wenn solche Verankerungsdaten, insbesondere einmalig, regelmäßig oder unregelmäßig wiederkehrend oder kontinuierlich, an eine Übermittlungseinrichtung übermittelt werden, kann anhand der Verankerungsdaten eine Untergrundbeschaffenheit oder ein Problem im Zusammenhang mit der mechanischen Integrität des Verankerungsgrunds (zum Beispiel eine verringerte Stabilität des Verankerungsgrunds oder eine verringerte Auszugskraft des Messelements oder eines Befestigungselements aus dem Verankerungsgrund) ermittelt und erkannt werden. Somit können auch langfristige Veränderungen der Verankerungskraft des Messelements in dem Verankerungsgrund sensorisch erkannt werden.

Gemäß einem exemplarischen Ausführungsbeispiel der Erfindung ist ein als Messsonde dienendes Messelement geschaffen, das in einem Verankerungsgrund gesetzt werden kann, um dort Verankerungsdaten zum Charakterisieren des Verankerungsgrunds zu messen, zum Beispiel Zugspannungen. Auf diese Weise können zum Beispiel langfristige Änderungen der Kraftverhältnisse im Verankerungsgrund erkannt werden, die zum Beispiel einen Hinweis auf eine notwendige Wartung, einen Austausch von Befestigungselementen oder sonstige Sicherungsmaßnahme geben können. Zum Beispiel kann in einer Brücke oder in Tübbingen einer Tunnelkonstruktion eine sich über die Zeit hinweg aufbauende mechanische Schwächung mittels solcher Messelemente erkannt und behoben werden und somit die Betriebssicherheit solcher und anderer Bauwerke sichergestellt werden. Unter Einsatz einer Übermittlungseinrichtung an dem Messelement können Sensordaten (zum Beispiel elektrisch, optisch oder elektromagnetisch) vom Setzort des Sensors an ein Äußeres des Verankerungsgrunds zur Weiterverarbeitung oder Auswertung übermittelt werden. Mit Vorteil kann mindestens ein Befestigungsgewinde des Messelements eine einfache und zuverlässige Befestigung des Messelements in oder an dem Verankerungsgrund sicherstellen. Wird der Sensor getrennt von bzw. außerhalb des mindestens einen Befestigungsgewindes positioniert, so kann eine unerwünschte Beeinträchtigung des Sensors insbesondere im Zusammenhang mit der Befestigung des Messelements unter Verwendung des Befestigungsgewindes vermieden werden. Auch kann dann eine Schwächung der Befestigungswirkung durch eine Wechselwirkung zwischen Sensor und Befestigungsgewinde ausgeschlossen werden.

Im Weiteren werden zusätzliche exemplarische Ausführungsbeispiele des Messelements, der Anordnung und des Verfahrens beschrieben.

Gemäß einem exemplarischen Ausführungsbeispiel kann das Messelement ein zweites Befestigungsende an einem gegenüberliegenden zweiten Ende des Schaftabschnitts aufweisen, das in einem in dem Verankerungsgrund verankerten Zustand an einer Außenseite des Verankerungsgrunds oder in dem Verankerungsgrund zu befestigen ist. Entsprechend kann das Verfahren ein Ausbilden eines zweiten Befestigungsendes an einem gegenüberliegenden zweiten Ende des Schaftabschnitts aufweisen, das in einem in dem Verankerungsgrund verankerten Zustand an einer Außenseite des Verankerungsgrunds oder in dem Verankerungsgrund zu befestigen ist. Im Rahmen der vorliegenden Anmeldung kann unter dem Begriff "zweites Befestigungsende" ein Endabschnitt des Schaftabschnitts oder an dem Schaftabschnitt verstanden werden, der im in einem Untergrund gesetzten Zustand des Messelements außerhalb des Verankerungsgrunds oder in einem außenseitigen Endbereich eines Verankerungslochs in dem Verankerungsgrund angeordnet sein kann. Eine Befestigung an zwei Befestigungsenden kann die Zuverlässigkeit des gesetzten Messelements weiter verbessern.

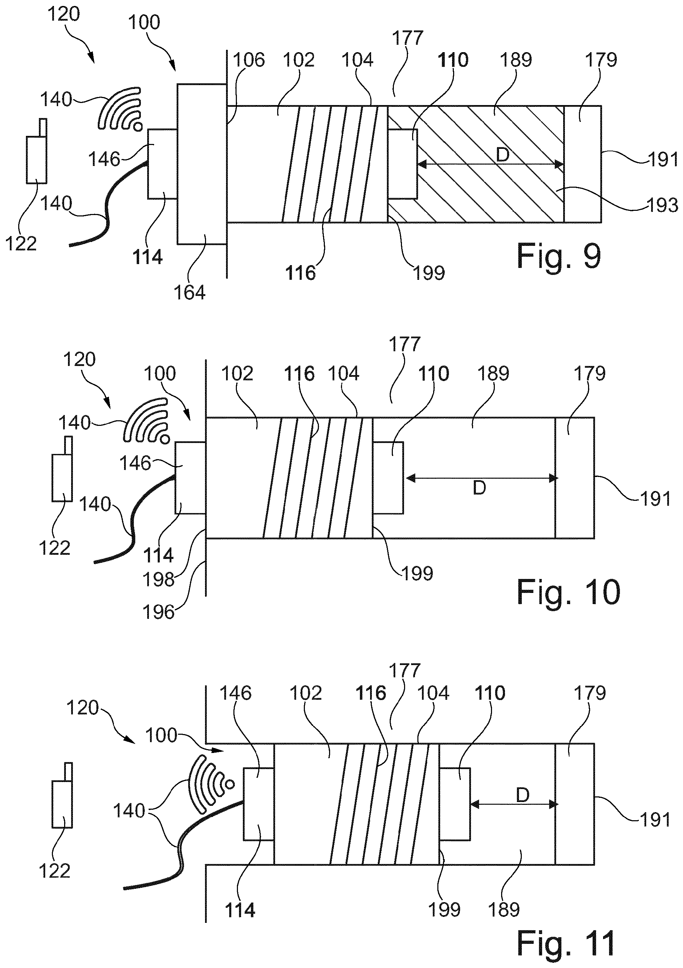

Gemäß einem Vergleichsbeispiel kann der Sensor an dem ersten Befestigungsende angeordnet sein. Beispielsweise kann der Sensor an einer Stirnfläche des Schaftabschnitts am ersten Befestigungsende angeordnet sein. Der Sensor kann zum Erfassen von für die Verankerungsdaten indikativen Signalen von einem separat von dem Schaftabschnitt in dem Verankerungsgrund anzubringenden Sensorgegenstück (zum Beispiel ein Reflektor oder ein Schwingungsplättchen) des Messelements ausgebildet sein. Entsprechende Vergleichsbeispiele sind in Figur 9 bis Figur 11 dargestellt. Schaftabschnitt mit Sensor einerseits und Sensorgegenstück andererseits können voneinander getrennt an unterschiedlichen Positionen und voneinander beabstandet in einem Verankerungssackloch im Verankerungsgrund angeordnet werden. Durch die Übermittlung von Signalen zwischen Sensor und Sensorgegenstück, die beide am Verankerungsgrund montiert sind, können Rückschlüsse auf die mechanischen Eigenschaften des Verankerungsgrunds gezogen werden, insbesondere wenn sich diese über die Zeit hinweg verändern. Beispielsweise können auf diese Weise Schwingungen und/oder räumliche Verschiebungen im Verankerungsgrund erfasst werden.

Gemäß einem Vergleichsbeispielkann das Sensorgegenstück ein an dem Verankerungsgrund anzubringender Antwortsignalgenerator zum Generieren von Antwortsignalen als Antwort auf von dem als Signalquelle ausgebildeten Sensor empfangenen Sensorsignalen sein, wobei die Antwortsignale von dem Sensor zu empfangen sind. Mit anderen Worten kann gemäß der beschriebenen Ausgestaltung der Sensor primäre Sensorsignale aussenden, die auf das Sensorgegenstück treffen. Die Sensorsignale können mit dem im Verankerungsgrund gesetzten Sensorgegenstück wechselwirken, sodass auf Basis der Sensorsignale erzeugte Antwortsignale des im Verankerungsgrund verankerten Sensorgegenstücks auch Informationen über die Beschaffenheit des Verankerungsgrunds beinhalten. Besagte Antwortsignale können vom Sensor detektiert werden und können Informationen über statische und/oder dynamische Eigenschaften das Verankerungsgrunds enthalten. Aus den Antwortsignalen, insbesondere aus einer Veränderung der Antwortsignale über die Zeit hinweg, kann daher auf die Beschaffenheit des Verankerungsgrunds, und insbesondere auf Veränderungen der Beschaffenheit des Verankerungsgrunds über die Zeit hinweg, geschlossen werden.

Gemäß einem Vergleichsbeispielkann das als Antwortsignalgenerator ausgebildete Sensorgegenstück ein Signalreflektor zum Reflektieren von Sensorsignalen sein, die von dem Sensor ausgesandt werden. Mit anderen Worten können die von dem Sensor erzeugten Sensorsignale beim Auftreffen auf das Sensorgegenstück reflektiert werden, um dann zum Sensor zurück zu propagieren. Gemäß einer solchen Ausgestaltung kann das Sensorgegenstück rein passiv, zum Beispiel als optischer Spiegel, ausgebildet werden. Die Eigenschaften der reflektierten Sensorsignale können von der Beschaffenheit des Untergrunds bzw. dessen Kraftkonfiguration abhängen und somit Verankerungsdaten liefern. Zum Beispiel kann ein vom Sensor ausgesandter Laserstrahl an einem als optischer Spiegel ausgebildeten Signalreflektor reflektiert und zum Sensor zurückgespiegelt werden, wo der reflektierte Laserstrahl erfasst und ausgewertet werden kann.

Gemäß einem Vergleichsbeispielkann ein als Signalquelle ausgebildeter Sensor zum Aussenden von optischen Sensorsignalen ausgebildet sein und kann das Sensorgegenstück zum Rücksenden von optischen Antwortsignalen in Antwort auf die besagten optischen Sensorsignale zum Empfangen durch den Sensor ausgebildet sein. Ein optisches Sensorsignal kann zum Beispiel sichtbares Licht, ultraviolettes Licht und/oder Infrarotstrahlung aufweisen. Der Sensor kann entsprechend der beschriebenen Ausgestaltung eine elektromagnetische Strahlungsquelle, wie zum Beispiel eine Leuchtdiode oder eine Laserdiode, aufweisen. Ferner kann der Sensor einen elektromagnetischen Strahlungsdetektor, zum Beispiel eine Fotodiode oder ein Fotodioden-Array, aufweisen. Das Sensorgegenstück kann dann als optischer Spiegel ausgebildet sein. Vom Sensor erzeugte Lichtwellen können am Sensorgegenstück reflektiert und vom Sensor detektiert werden.

Gemäß einem Vergleichsbeispielkann ein als Signalquelle ausgebildeter Sensor zum Aussenden von akustischen Sensorsignalen, insbesondere Ultraschall-Sensorsignalen, ausgebildet sein und kann das Sensorgegenstück zum Rücksenden von akustischen Antwortsignalen in Antwort auf die besagten akustischen Sensorsignale zum Empfangen durch den Sensor ausgebildet sein. Ein akustisches Sensorsignal kann zum Beispiel ein Ultraschallsignal aufweisen. Der Sensor kann entsprechend eine Ultraschallquelle aufweisen, zum Beispiel ausgebildet mittels einer piezoelektrischen Komponente. Ferner kann der Sensor einen akustischen Detektor, zum Beispiel einen mittels einer (insbesondere weiteren) piezoelektrischen Komponente gebildeten Ultraschalldetektor aufweisen. Das Sensorgegenstück kann gemäß der beschriebenen Ausgestaltung als akustischer Reflektor, insbesondere Ultraschallreflektor, ausgebildet sein. Vom Sensor erzeugte Ultraschallwellen können am Sensorgegenstück reflektiert und vom Sensor detektiert werden. Mittels der beschriebenen Ultraschall-Sensorik kann die Untergrundbeschaffenheit aufgrund eines kraftabhängigen Antwortsignals charakterisiert werden, um die Verankerungsdaten zu bestimmen.

Gemäß einem Vergleichsbeispielkann ein als Signalquelle ausgebildeter Sensor zum Aussenden von elektrischen Sensorsignalen, insbesondere Strom-Sensorsignalen, ausgebildet sein und kann das Sensorgegenstück zum Rücksenden von elektrischen Antwortsignalen in Antwort auf die besagten elektrischen Sensorsignale zum Empfangen durch den Sensor ausgebildet sein. Als Signalquelle kann der Sensor beispielsweise eine Induktionsquelle auf Basis von elektrischem Strom aufweisen. Ein zeitabhängiger elektrischer Strom kann in einem beispielsweise eine Spule aufweisenden Sensorgegenstück ein Magnetfeld induzieren, das wiederum ein von dem Sensor detektierbares elektrisches Antwortsignal generieren kann. Auf diese Weise können Verankerungsdaten zum Charakterisieren der kräftebezogenen Untergrundbeschaffenheit erfasst werden.

Bei den zuvor beschriebenen Ausführungsbeispielen kann es vorteilhaft sein, eine Energiequelle (insbesondere eine elektrische Energiequelle wie zum Beispiel einen Akku-Pack) am Sensor anzubringen, zum Beispiel integriert in den Schaftabschnitt. Besagte Energiequelle kann dann den Sensor mit Energie zum Erzeugen, Detektieren und/oder Auswerten von Sensorsignalen versorgen. In einem Ausführungsbeispiel ist es auch möglich, elektrische Versorgungsenergie zum Betreiben des Messelements mittels eines Stromkabels zuzuführen, beispielsweise von außerhalb des Verankerungsgrunds. Gemäß noch einer anderen Alternative kann die Energieversorgung des Messelements durch eine Selbstversorgungseinrichtung des Messelements bewerkstelligt werden, die zum Beispiel Versorgungsenergie aus Schwingungen von Messelements bzw. des Verankerungsgrunds gewinnen kann und/oder eine Solarzelle aufweisen kann.

Gemäß einem anderen Vergleichsbeispielkann das Sensorgegenstück eine am Verankerungsgrund anzubringende Signalquelle zum Aussenden von Signalen zum Empfang durch den Sensor sein. Das Sensorgegenstück kann dann als aktive Signalquelle fungieren. Gemäß dieser Ausgestaltung kann das am Verankerungsgrund getrennt von dem Schaftabschnitt angebrachte Sensorgegenstück ein zum Beispiel optisches, akustisches oder elektrisches Sensorsignal erzeugen, um damit den Sensor zu bestrahlen oder zu beaufschlagen. Da das Sensorgegenstück am Verankerungsgrund montiert ist, kann das vom Sensor detektierte Sensorsignal für die Eigenschaften des Verankerungsgrunds indikativ sein (zum Beispiel im Falle von Schwingungen im Verankerungsgrund oder im Falle einer statischen Verschiebung im Verankerungsgrund). Gemäß dieser Ausgestaltung kann eine Energiequelle zum Versorgen des Sensorgegenstücks mit Betriebsenergie zum Erzeugen der Sensorsignale in das Sensorgegenstück integriert werden.

Gemäß einem Vergleichsbeispiel der Anordnung kann der Schaftabschnitt samt Sensor von einer Stirnfläche eines Verankerungssacklochs des Verankerungsgrunds beabstandet sein und kann das Sensorgegenstück an der Stirnfläche angebracht sein. Die Stirnfläche kann beispielsweise ein Bohrlochtiefstes des Verankerungssacklochs definieren. Zum Beispiel kann die Stirnfläche eine ebene Fläche, eine Kegelfläche oder eine Kegelstumpffläche sein. Die Geometrie der Stirnfläche kann von einem Werkzeug (zum Beispiel einem Bohrer) abhängen, mit dem das Verankerungssackloch gebildet wird. Das Sensorgegenstück kann an der Stirnfläche angebracht werden, zum Beispiel angeklebt werden. Das Sensorgegenstück kann zum Beispiel als Scheibe ausgebildet sein. Der Schaftabschnitt samt Sensor kann ein vom Sensorgegenstück separat zu handhabendes Teil des Messelements sein und kann beispielsweise mittels eines Befestigungsgewindes im Verankerungssackloch befestigt werden. Im gesetzten Zustand kann der Sensor von Sensorgegenstück in axialer Richtung beabstandet sein, sodass zwischen Sensor und Sensorgegenstück ein Zwischenraum gebildet sein kann. Ein Sensorsignal kann entlang des Zwischenraums zwischen Sensor und Sensorgegenstück propagieren. Verschiebungen im Verankerungsgrund können den Zwischenraum verkürzen oder verlängern, was sensorisch detektiert werden kann.

Gemäß einem Vergleichsbeispiel der Anordnung kann ein Hohlraum des Verankerungssacklochs zwischen dem Sensorgegenstück und dem Schaftabschnitt samt Sensor zumindest teilweise mit einem für das Signal transparenten Verfüllmaterial verfüllt sein. Indem ein nach dem Setzen des Messelements in ein Verankerungssackloch des Verankerungsgrunds verbleibender Hohlraum ganz oder teilweise verfüllt wird, kann die Reproduzierbarkeit der sensorischen Messung verbessert werden und kann die Betriebssicherheit des von makroskopischen Hohlräumen dann freien Verankerungsgrunds verbessert werden. Ein entsprechendes Verfüllmaterial sollte die sensorische Erfassung der Verankerungsdaten allerdings nicht stören und kann daher aus einem Material gebildet werden, das für die entsprechenden Sensorsignale durchlässig ist. Wenn zum Beispiel die zwischen Sensor und Sensorgegenstück übermittelten Signale optische Signale sind, kann das Verfüllmaterial optisch transparent sein. Sind die zwischen Sensor und Sensorgegenstück laufenden Signale akustische Signale, kann das Verfüllmaterial für akustische Wellen passierbar sein.

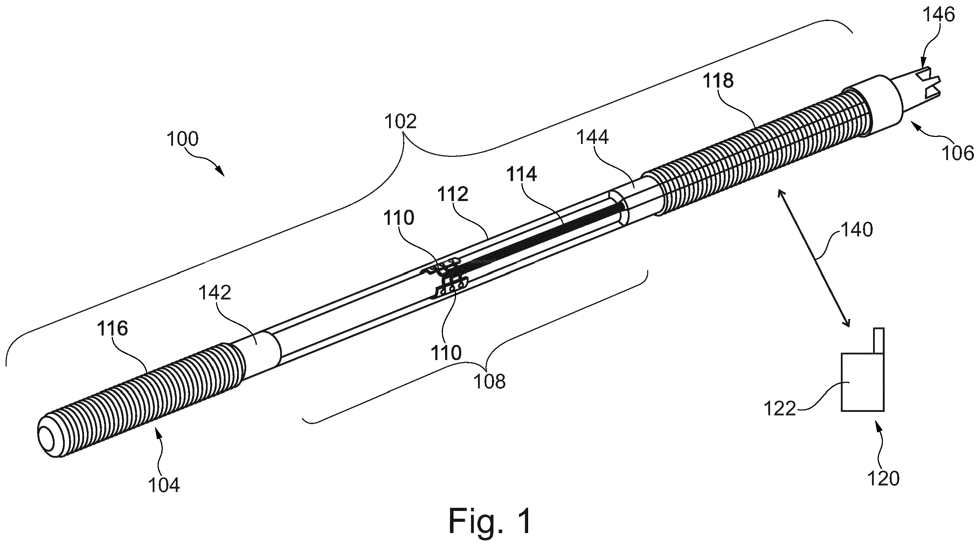

Gemäß einem anderen exemplarischen Ausführungsbeispiel kann der Sensor an dem Schaftabschnitt angeordnet sein, bevorzugt an dessen Mantelfläche. Entsprechende Ausführungsbeispiele sind in Figur 1 bis Figur 8 dargestellt.

Im Rahmen der vorliegenden Anmeldung kann unter dem Begriff "radial verjüngter Verjüngungsabschnitt" insbesondere ein axial zentraler Bereich des Schaftabschnitts verstanden werden, der eine geringere Radialausdehnung hat als ein jeweils angrenzender anderer Bereich des Schaftabschnitts. Der radial verjüngte Verjüngungsabschnitt kann hierbei so bemessen sein, dass er einen radial zurückversetzten Aufnahmeraum für mindestens einen Sensor bildet, so dass der mindestens eine Sensor beim Setzen des Messelements vor einer mechanischen Beschädigung durch eine unerwünschte Wechselwirkung mit einer Wandung des Verankerungsgrunds geschützt ist. Der radiale Verjüngungsabschnitt kann auch einen mechanisch schwächsten Abschnitt des Messelements bilden, da er aufgrund seiner Verjüngung besonders anfällig für Verbiegung und/oder Zugspannungen sein kann. Daher eignet sich der Verjüngungsabschnitt besonders gut zum Anordnen des Sensors, da dieser an dieser Position bei Einwirken einer Last ein besonders starkes Sensorsignal erfassen kann.

Gemäß einem exemplarischen Ausführungsbeispiel weist das Messelement eine Schutzeinrichtung zum Schützen des Sensors auf. Im Rahmen der vorliegenden Anmeldung kann unter dem Begriff "Schutzeinrichtung" jede beliebige körperliche Struktur und/oder jeder beliebige Mechanismus verstanden werden, die bzw. der mindestens einen in dem Verjüngungsabschnitt untergebrachten Sensor einen Schutz vor insbesondere mechanischer Beschädigung durch Umgebungsmaterial im Verankerungsgrund liefert, ohne die Sensorfunktion oder Sensorgenauigkeit hierbei zu beeinträchtigen. Der Schutz vor Beeinträchtigung kann hierbei insbesondere einen Schutz vor mechanischer Beschädigung beim und/oder nach dem Setzen des Messelements in dem Verankerungsgrund bezeichnen, aber auch eine unerwünschte Wechselwirkung mit einem gasförmigen, flüssigen und/oder festen Medium beim Setzen und/oder nach dem Setzen des Messelements in dem Verankerungsgrund bezeichnen. Eine solche Wechselwirkung kann mit Material des Verankerungsgrunds oder mit einem Hilfsmaterial (wie zum Beispiel einem Epoxidharz oder Mörtel im Falle eines chemischen Dübels) in einem Umgebungsbereich des Messelements erfolgen.

Somit kann ein Messelement bereitgestellt werden, das mindestens einen Sensor aufweist, der in einem verjüngten Schaftbereich geschützt untergebracht werden kann. Ein derart vorgesehener Sensor kann zum Erfassen mindestens eines Verankerungsparameters oder anderer Verankerungsdaten beim Setzen und/oder nach dem Setzen des Befestigungselements in einem Verankerungsgrund ausgebildet und konfiguriert sein. Durch das Anordnen des mindestens einen Sensors in dem radial zurückversetzten Verjüngungsabschnitt des Befestigungselements kann eine Beschädigung des mindestens einen Sensors beim Setzen des Befestigungselements zuverlässig vermieden werden, beispielsweise beim Einschlagen eines Bolzenankers in ein Verankerungsloch in einem beispielsweise aus Beton gebildeten Verankerungsgrund. Auch kann ein solches radiales Zurückversetzen des Sensors diesen davor schützen, dass von dem Verankerungsgrund mantelseitige Kräfte auf den Sensor übertragen werden, welche die eigentlich zu erfassenden Sensordaten verfälschen können. Als besonders vorteilhaft hat es sich erwiesen, den zumindest teilweise in dem Verjüngungsabschnitt angeordneten Sensor zusätzlich mit einer Schutzeinrichtung auszustatten (insbesondere zu bedecken), welche die sensorische Aktivität des Sensors ungestört aufrechterhält und dennoch den Sensor vor Beschädigung oder sogar Zerstörung beim Setzen oder im Betrieb des Befestigungselements schützt. Auf diese Weise ist es möglich, einen Sensor an einer Position von Interesse anzubringen, die sich im gesetzten Zustand im Inneren des Verankerungsgrunds befindet. Spezifisch an diesem präzise auswählbaren Ort von Interesse können dann Verankerungsdaten von dem gesetzten Sensor ins Verankerungsgrundäußere übermittelt werden. Ein Benutzer erhält somit eine sensorische Rückmeldung, die den Erfolg und/oder Misserfolg eines Verankerungsprozesses anzeigt und einem Benutzer daher die Überprüfung der Korrektheit des Setzvorgangs ermöglicht. Alternativ oder ergänzend kann der an dem Befestigungselement integrierte mindestens eine Sensor auch nach - und sogar Jahre nach - Setzen des Befestigungselements Informationen über den Setzzustand liefern, beispielsweise eine Verringerung oder einen Verlust von Befestigungs- oder Setzkraft des Befestigungselements in dem Verankerungsgrund erkennbar machen. Eine solche reduzierte Verankerungskraft kann beispielsweise nach einem längeren Zeitraum in einem Gebäude (zum Beispiel einer Brücke) auftreten, in dem ein Dübel oder Bolzenanker gesetzt worden ist. Eine kritische Verringerung der Setzkraft kann daher ausreichend lange vor einem Versagensfall erkannt werden, sodass rechtzeitig Gegenmaßnahmen ergriffen werden können.

Gemäß einem exemplarischen Ausführungsbeispiel kann der Sensor zum Erfassen von Verankerungsdaten ausgebildet sein, die relative Information und/oder absolute Information betreffend einen Messparameter enthalten. Relative Information betreffend einen Messparameter kann beispielsweise die Information sein oder beinhalten, dass sich der Messparameter verändert hat, ob er größer oder kleiner geworden ist, etc. Absolute Information betreffend einen Messparameter kann quantitativ angeben, auf welchen Wert oder um welche Wertedifferenz sich ein Messparameter verändert hat.

Gemäß einem exemplarischen Ausführungsbeispiel kann die Übertragungseinrichtung mindestens ein Übertragungskabel aufweisen, das zumindest abschnittsweise entlang des Schaftabschnitts verlaufend angeordnet ist. Gemäß einer solchen Ausgestaltung kann kabelgebunden Sensorinformation vom Sensor an eine Zielentität beziehungsweise eine Empfängereinrichtung übermittelt werden. Dies stellt eine einfache und fehlerrobuste Lösung dar. Ein solches Übertragungskabel kann zum Beispiel außen entlang des Schaftabschnitts (zum Beispiel versenkt in einem weiteren verjüngten Bereich, zum Beispiel einer Nut) oder im Inneren des Schaftabschnitts geführt werden.

Gemäß einem exemplarischen Ausführungsbeispiel kann die Übertragungseinrichtung zum drahtlosen Übertragen der Verankerungsdaten ausgebildet sein, insbesondere mittels zumindest einer Technologie aus einer Gruppe bestehend aus Near Field Communication (NFC), Bluetooth, Wireless Local Area Network (WLAN), Narrowband Internet of Things (NB-IoT), Long Term Evolution (LTE) und Low Power Wide Area Network (LPWAN). Gemäß einer solchen Ausgestaltung können für den Sensor Daten drahtlos vom Inneren des Verankerungsgrunds bis zu einem Äußeren des Verankerungsgrunds zur Weiterverarbeitung oder Auswertung an ein Empfängergerät übertragen werden. Kabel können dann zumindest abschnittsweise mit Vorteil entbehrlich sein. Zum Beispiel kann die Übermittlung unter Verwendung von Funkwellen einer geeigneten Frequenz, insbesondere im Hochfrequenzbereich, übertragen werden.

Gemäß einem exemplarischen Ausführungsbeispiel kann der Sensor zum Erfassen von zumindest einem Parameter aus einer Gruppe ausgebildet sein, die besteht aus Temperatur, Zugspannung, Dehnung und Drehmoment. Beispielsweise kann eine von einer Soll-Temperatur oder einem Soll-Temperaturbereich abweichende Ist-Temperatur des Sensors auf Probleme durch übermäßige Reibung oder Kraftübertragung hindeuten. Eine exzessive Dehnung des Schaftabschnitts kann zum Beispiel mittels eines Dehnmessstreifens oder eines anderen entsprechend ausgebildeten Sensors erkannt werden. Auch ein auf das Messelement im Verankerungsgrund einwirkendes Drehmoment kann einem Benutzer eine Information über die Kraftverhältnisse im Verankerungsgrund liefern. Dadurch kann die Zuverlässigkeit der Beurteilung der Beschaffenheit des Verankerungsgrunds durch einen Benutzer insbesondere bei sicherheitskritischen Anwendungen sichergestellt werden.

Gemäß einem exemplarischen Ausführungsbeispiel kann der Sensor einen Dehnmessstreifen aufweisen. Bevorzugt kann der Sensor also als DMS-Sensor ausgebildet sein und eine Dehnung an dem Schaftabschnitt detektieren. Dadurch können zum Beispiel kritische Zugspannungen zuverlässig erkannt werden. Ein Dehnmessstreifen kann problemlos in einem Verjüngungsabschnitt des Schaftabschnitts angebracht werden. Auch bei Bedeckung durch eine Schutzeinrichtung, zum Beispiel einen kompressiblen Schaum, kann die Funktionsfähigkeit eines Dehnmessstreifens aufrechterhalten bleiben, um Dehnungen des Schaftabschnitts präzise und fehlerrobust sensorisch zu erfassen.

Gemäß einem exemplarischen Ausführungsbeispiel kann das Messelement zumindest einen weiteren zumindest teilweise in dem Verjüngungsabschnitt angeordneten Sensor zum Erfassen von weiteren Verankerungsdaten des Messelements in dem Verankerungsgrund aufweisen. Somit ist es auch möglich, mehrere Sensoren an dem Messelement zu integrieren. Dies kann dann zum Beispiel eine ortsaufgelöste Messung eines Verankerungsparameters ermöglichen, zum Beispiel durch mehrere Dehnmessstreifen, die entlang eines Umfangs und/oder entlang einer axialen Richtung des Schaftabschnitts des Messelements angeordnet sind. Alternativ oder ergänzend können die mehreren Sensoren aber auch unterschiedliche (insbesondere komplementäre) Parameter erfassen, beispielsweise Dehnung und Temperatur. Dies erlaubt eine Verfeinerung des Rückschlusses der Beschaffenheit bzw. der Kraftverhältnisse des Verankerungsgrund.

Gemäß einem exemplarischen Ausführungsbeispiel kann die Schutzeinrichtung kompressibles Material aufweisen, insbesondere einen kompressiblen festen Schaum. Besonders bevorzugt ist es, die Schutzeinrichtung aus einem kompressiblen Material, wie zum Beispiel einem Schaum oder einem Gummi, herzustellen. Auf diese Weise ist es möglich, den in dem Verjüngungsabschnitt angeordneten Sensor einerseits zuverlässig vor einer mechanischen Beeinträchtigung und/oder einer chemischen Beeinträchtigung zu schützen und gleichzeitig die Empfindlichkeit des Sensors zum Detektieren der Verankerungsdaten aufrechtzuerhalten. Parasitäre Kräfte, die durch den Sensor nicht erfasst werden sollen, können daher von dem Sensor ferngehalten werden.

Gemäß einem exemplarischen Ausführungsbeispiel kann die Schutzeinrichtung feuchtigkeitsundurchlässiges Material aufweisen, insbesondere einen feuchtigkeitsundurchlässigen Schaum. Wenn die Schutzeinrichtung aus einem feuchtigkeitsundurchlässigen Material ausgebildet ist, kann selbst ein feuchtigkeitsempfindlicher Sensor des Messelements auch in feuchter Umgebung (zum Beispiel in feuchtem Mauerwerk) störungsfrei die Verankerungsdaten erfassen.

Gemäß einem exemplarischen Ausführungsbeispiel kann die Schutzeinrichtung ein aromatisches Isocyanat aufweisen. Isocyanat hat sich als besonders wirksam erwiesen, gleichzeitig eine Kompressibilität als auch eine mechanische Schutzfunktion bereitzustellen, die den Sensor vor Artefakten bewahrt und dessen Empfindlichkeit aufrechterhält. Außerdem ist ein solches Material flüssigkeitsundurchlässig und erlaubt somit einen Einsatz des Messelements samt Sensor in feuchter Umgebung.

Gemäß einem exemplarischen Ausführungsbeispiel kann die Schutzeinrichtung zumindest teilweise in dem radial verjüngten Verjüngungsabschnitt und den Sensor schützend bedeckend angeordnet sein. Indem auch die Schutzeinrichtung ganz oder teilweise in dem Verjüngungsabschnitt, mithin radial zurückversetzt oder fluchtend mit dem Rest des Schaftabschnitts, angeordnet ist, stört die Schutzeinrichtung den Setzvorgang des Messelements, beispielsweise ein Einschlagen eines Bolzenankers oder ein Eindrehen einer Holzschraube, nicht. Auch sind dadurch übermäßige mechanische Einwirkungen auf den von der Schutzeinrichtung bedeckten Sensor beim Setzen des Messelements zuverlässig vermieden.

Die Schutzeinrichtung ist umfänglich geschlossen in dem radial verjüngten Verjüngungsabschnitt angeordnet. Somit kann die Schutzeinrichtung selbst als ringförmiger Körper ausgebildet sein, der in einer ringförmigen Aussparung des Schaftabschnitts angeordnet ist, die den Verjüngungsabschnitt bildet. Dies fördert zum einen ein zuverlässiges Verbleiben der Schutzeinrichtung an Ort und Stelle und vermeidet überdies die Erzeugung übermäßiger Reibungskräfte beim Setzen des Messelements, da die ringförmige Schutzeinrichtung dann nicht über den Verjüngungsabschnitt in radialer Richtung übersteht.

Gemäß einem exemplarischen Ausführungsbeispiel kann die Schutzeinrichtung in dem radial verjüngten Verjüngungsabschnitt bis zu einer solchen radialen Höhe angeordnet sein, dass die Schutzeinrichtung radial nicht über den Schaftabschnitt übersteht, insbesondere mit diesem bündig abschließt. Anschaulich können Schutzeinrichtung und daran angeschlossene Abschnitte des Schaftabschnitts fluchten.

Gemäß einem exemplarischen Ausführungsbeispiel kann die Schutzeinrichtung (alternativ oder ergänzend zu dem kompressiblen Material) mindestens eine Schutzrampe aufweisen, die bezogen auf eine Einschraubrichtung des Messelements hinter (insbesondere unmittelbar hinter) dem Sensor angeordnet ist, insbesondere zumindest teilweise in dem radial verjüngten Verjüngungsabschnitt. Alternativ oder ergänzend zum Ausbilden der Schutzeinrichtung als kompressibler Ring kann die Schutzeinrichtung auch als (beispielsweise aus einem Metall ausgebildete) Rampe vorgesehen sein. Letztere kann bei einem drehenden Setzen des Messelements in einem Untergrund einen radialen Überstand gegenüber dem Sensor definieren, was zuverlässig einen radialen Abstand zwischen dem Sensor in dem Verjüngungsabschnitt und einer Wandung des Verankerungsgrunds aufrechterhält. Die Schutzrampe kann so ausgebildet sein, dass diese ausgehend von einem radialen Ende, das stetig mit dem Verjüngungsabschnitt abschließt, sich kontinuierlich radial nach außen erstreckt. Die Schutzrampe erstreckt sich dann bis zu einer solchen radialen Position, dass an dieser Stelle ein abruptes Rückführen der Schutzrampe zu einer radialen Position erfolgt, die dem Verjüngungsabschnitt entspricht. An diesen radial sich am weitesten nach außen erstreckenden Endbereich der Schutzrampe schließt sich der Sensor so an, dass der Sensor in einem Abschirmbereich der Schutzrampe angeordnet ist. In einer Eindrehrichtung kann sich also der Sensor direkt oder mit Abstand an einen sich radial am weitesten nach außen erstreckenden Endbereich der Schutzrampe anschließen.

Gemäß einem exemplarischen Ausführungsbeispiel kann das erste Befestigungsende ein Verankerungsgewinde aufweisen, insbesondere ein Betonschraubengewinde oder ein Holzschraubengewinde oder auch ein metrisches Gewinde. Wenn das erste Befestigungsende mit einem Verankerungsgewinde versehen ist, kann ein drehendes Setzen des Messelements in den Verankerungsgrund gefördert werden. Das Verankerungsgewinde kann in einer Spitze des Messelements enden, beispielsweise um ein vorbohrungsfreies Setzen eines Messelements in einem Untergrund zu fördern, zum Beispiel ein vorbohrungsfreies Setzen einer Holzschraube in einem Holz-Verankerungsgrund. Alternativ kann das Verankerungsgewinde auch an einer planen Stirnfläche des Messelements enden, zum Beispiel wenn das Messelement drehend in einen mit einer Vorbohrung versehenen Verankerungsgrund gesetzt wird.

Gemäß einem exemplarischen Ausführungsbeispiel kann das zweite Befestigungsende ein Außengewinde, insbesondere ein metrisches Außengewinde, aufweisen. An dem zweiten Befestigungsende des Messelements kann ein Außengewinde angebracht sein, das beispielsweise zum Verspannen oder Verspreizen des Messelements eingesetzt wird. Dies kann beispielsweise bei einem Bolzenanker der Fall sein, der zunächst in ein Verankerungsloch in dem Verankerungsgrund eingeschlagen werden kann, bevor zum Beispiel durch Aufschrauben einer Mutter auf das Außengewinde ein axialer Druck auf das Messelement ausgeübt werden kann, das im Inneren des Verankerungsgrunds zu einem Verschieben einer Spreizhülse entlang eines Konuskörpers des Bolzenankers führt, was eine Verankerungskraft bewirkt.

Gemäß einem exemplarischen Ausführungsbeispiel kann der Schaftabschnitt zumindest abschnittsweise gewindefrei ausgebildet sein. Somit ist es möglich, dass ein Teil des Schaftabschnitts von einem Gewinde frei ist, das heißt ein glatter Bolzenabschnitt ist. Dies kann zum Beispiel ein reibungsarmes Setzen des Messelements fördern. Ein anderer Abschnitt des Schaftabschnitts kann mit einem Gewinde ausgestattet sein, beispielsweise mit dem oben beschriebenen Verankerungsgewinde und/oder Außengewinde.

Gemäß einem exemplarischen Ausführungsbeispiel ist der radial verjüngte Verjüngungsabschnitt als ringförmige Aussparung an einer radialen Außenseite des Schaftabschnitts ausgebildet sein. Mit Vorteil kann der Verjüngungsabschnitt also in einem Außenbereich des Befestigungsabschnitts angeordnet sein. Dies erlaubt zum einen eine besonders einfache Montage des mindestens einen Sensors, der einfach in die Aussparung an einer Außenseite des Schaftabschnitts eingelegt und dort (zum Beispiel klebend) befestigt werden kann. Zum anderen ist die beschriebene Position an einer Außenseite des Schaftabschnitts eine besonders geeignete Möglichkeit, Sensordaten an einer maßgeblichen Position zu erfassen. Insbesondere eine Abnahme der Setzkraft über die Zeit hinweg bzw. das Ausbilden einer Zugspannung kann an einem solchen Verjüngungsabschnitt mit besonders hoher Genauigkeit sensorisch erkannt werden.

Gemäß einem exemplarischen Ausführungsbeispiel kann das Messelement als Holzschraube ausgebildet sein. Zum Beispiel kann eine Holzschraube (mit oder ohne Vorbohrung) in den Holz-Verankerungsgrund gesetzt werden.

Gemäß einem exemplarischen Ausführungsbeispiel kann das Messelement als Betonschraube ausgebildet sein. Eine solche Betonschraube kann, vorzugsweise mit Vorbohrung, in den Beton-Verankerungsgrund eingeführt werden.

Gemäß einem exemplarischen Ausführungsbeispiel kann das Messelement als Bolzenanker, insbesondere als Betonanker, ausgebildet sein. Im Rahmen der vorliegenden Anmeldung kann unter einem "Bolzenanker" insbesondere eine in einem Setzloch eines Verankerungsgrunds verankerbare mehrteilige Befestigungsvorrichtung verstanden werden, die zumindest einen Bolzenkörper und eine darauf montierte Spreizhülse aufweist. Ein Bolzenanker kann in ein Setzloch eingeführt werden und dann durch eine axiale Relativverschiebung zwischen Bolzenkörper und Spreizhülse in eine Konfiguration überführt werden, in der die Spreizhülse durch Eindringen eines endseitig radial erweiterten Spreizkörpers des Bolzenkörpers in radialer Richtung expandiert wird. Dadurch kommt es zu einer Verklemmung zwischen Spreizhülse und einer Wandung des Verankerungsgrunds, wodurch der Bolzenanker in dem Verankerungsgrund gesetzt ist. Ein Bolzenanker weist einen beispielsweise konusförmigen Spreizkörper und eine Spreizhülse auf, die durch Einziehen des Spreizkörpers in die Spreizhülse aufgespreizt werden kann. Der Spreizkörper kann einstückig an einen Schaftabschnitt angestückt sein, auf dem die Spreizhülse aufgesetzt werden kann. Zur Verankerung des Spreizankers kann dieser mit dem Spreizkörper voraus in ein Setzloch in einem Verankerungsgrund eingebracht werden, wobei auch die Spreizhülse in das Setzloch eingeführt werden kann. Danach kann der Spreizkörper zurückgezogen werden, ohne dass die im Setzloch reibschlüssig angeordnete Spreizhülse das Setzloch verlässt. Der Spreizkörper kann durch die beschriebene Vorgehensweise in die Spreizhülse eingezogen werden, wodurch die Spreizhülse in radialer Richtung aufspreizt. Dies verankert den Bolzenanker im Bohrloch. Ein Bolzenanker kann an dem ersten Befestigungsende eine konusförmige Erweiterung aufweisen, die mit einer auf dem Schaftabschnitt beweglich angeordneten Spreizhülse zusammenwirken kann. Ist der Bolzenanker in einem Verankerungsgrund (zum Beispiel aus Beton) eingeschlagen worden, kann ein Aufdrehen einer Mutter auf ein zweites Befestigungsende des Messelements eine Axialkraft zwischen Spreizhülse und Konuskörper bewirken, das heißt genauer gesagt ein Aufschieben der Spreizhülse auf den Konuskörper unter Ausbilden einer hohen Verankerungskraft.

Gemäß einem exemplarischen Ausführungsbeispiel kann das Messelement als Ankerstange ausgebildet sein, insbesondere für einen chemischen Dübel. Wenn das Messelement als (Gewinde- oder gewindefreie) Ankerstange ausgebildet ist, kann diese in ein Befestigungsloch des Verankerungsgrunds eingesetzt werden. Durch Einbringen eines aushärtbaren Mediums (zum Beispiel eines Epoxidharzes) bzw. von Mörtel vor oder nach dem Einführen der Ankerstange in den Verankerungsgrund kann es dann zum Ausbilden einer chemischen Verbindung zwischen Verankerungsgrund, Messelement und dem aushärtbaren Medium kommen.

Gemäß einem exemplarischen Ausführungsbeispiel kann das Messelement als Kunststoffdübel ausgebildet sein, insbesondere für eine Holzschraube. Wenn das Messelement als Dübel (insbesondere aus Kunststoff oder auch aus Metall) ausgebildet ist, kann ein solcher Dübel in ein Verankerungsloch im Verankerungsgrund eingeschlagen werden. Nachfolgend kann eine Schraube, zum Beispiel eine Holzschraube, in einen Aufnahmehohlraum des Dübels eingedreht werden, wodurch es zum Aufspreizen von Spreizelementen des Dübels und somit zum Ausbilden einer hohen Setzkraft kommt.

Andere Messelemente sind natürlich ebenfalls möglich.

Darüber hinaus kann die Anordnung optional auch den Verankerungsgrund aufweisen, wenn das Messelement darin gesetzt ist.

Gemäß einem exemplarischen Ausführungsbeispiel kann das Empfängergerät zum drahtlosen Kommunizieren mit dem Sensor ausgebildet sein. Das Empfängergerät kann also eine drahtlose Kommunikationseinrichtung zum drahtlosen Kommunizieren mit dem Sensor des Messelements aufweisen, selbst wenn der Sensor in einem Inneren des Verankerungsgrunds angeordnet ist. Alternativ oder ergänzend kann das Empfängergerät aber auch zum drahtgebundenen Kommunizieren mit dem Sensor ausgebildet sein, beispielsweise unter Verwendung eines Übermittlungskabels zwischen Sensor und Empfängergerät.

Gemäß einem exemplarischen Ausführungsbeispiel kann das Empfängergerät aus einer Gruppe ausgewählt sein, die besteht aus einem Computer und einem portablen Nutzer-Endgerät, insbesondere einem Smartphone oder einem Tablet. Beispielsweise kann ein Benutzer bequem an seinem Laptop oder an seinem Mobilfunkgerät den Erfolg eines Setzvorgangs ablesen, wenn Laptop oder Mobilfunkgerät mit dem Sensor zum Datenaustausch kommunizierfähig gekoppelt ist. Es ist auch möglich, als Empfängergerät einen Router einzusetzen, der in einem Kommunikationsnetzwerks kommunizierfähig implementiert werden kann.

Gemäß einem exemplarischen Ausführungsbeispiel kann als Schutzeinrichtung der zumindest teilweise in dem Verjüngungsabschnitt angeordnete Sensor mit Schaum umspritzt werden, der zumindest teilweise in den Verjüngungsabschnitt eingespritzt wird. Wenn der beispielsweise außenseitig an dem Verjüngungsabschnitt des Schaftabschnitts anzubringende mindestens eine Sensor installiert ist, kann durch einfaches Umspritzen mit einem Schaum (zum Beispiel auf Epoxidbasis) der Sensor an Ort und Stelle immobilisiert werden und vor mechanischen Einflüssen insbesondere während des Setzvorgangs geschützt werden. Gleichzeitig kann ein mit einem kompressiblen Schaum umspritzter Sensor, beispielsweise ein Dehnmessstreifen, ohne Verlust von Nachweisgenauigkeit Dehnungen oder andere Parameter an dem gesetzten Messelement erfassen. Auch ist es vorteilhaft, die Schutzvorrichtung in einfacher Weise mittels bloßen Umspritzens am Messelement anzubringen.

Gemäß einem exemplarischen Ausführungsbeispiel kann das Messelement während des Spritzens von Schaum zumindest abschnittsweise von einer Schale umgeben werden. Wenn zumindest der Verjüngungsabschnitt beim Umspritzen mit Schaum außenseitig durch eine Schale umgeben ist, kann präzise vorgegeben werden, bis zu welcher Radialerstreckung sich die schaumartige Schutzvorrichtung erstreckt. Dies erlaubt mit einfachen herstellungstechnischen Mitteln die Sicherstellung eines reibungsarmen Setzens des Messelements in einem Verankerungsgrund.

Im Folgenden werden exemplarische Ausführungsbeispiele der vorliegenden Erfindung mit Verweis auf die folgenden Figuren detailliert beschrieben.
Figur 1 zeigt ein Messelement gemäß einem exemplarischen Ausführungsbeispiel der Erfindung.
Figur 2 zeigt ein Detail eines Messelements gemäß einem exemplarischen Ausführungsbeispiel der Erfindung.
Figur 3 zeigt eine Querschnittsansicht eines Messelements gemäß einem exemplarischen Ausführungsbeispiel der Erfindung.
Figur 4 zeigt ein Messelement gemäß einem anderen exemplarischen Ausführungsbeispiel der Erfindung.
Figur 5 zeigt ein Messelement gemäß einem weiteren exemplarischen Ausführungsbeispiel der Erfindung.
Figur 6 zeigt ein Messelement gemäß noch einem anderen exemplarischen Ausführungsbeispiel der Erfindung.
Figur 7 zeigt eine Querschnittsansicht eines Messelements gemäß einem weiteren exemplarischen Ausführungsbeispiel der Erfindung.
Figur 8 zeigt ein Messelement gemäß noch einem anderen exemplarischen Ausführungsbeispiel der Erfindung.
Figur 9 bis Figur 11 zeigen in einem Verankerungsgrund gesetzte Messelemente gemäß Vergleichsbeispielen, bei denen ein Sensor an einem ersten Befestigungsende eines Schaftabschnitts angeordnet ist und zum Erfassen von von einem Sensorgegenstück in dem Verankerungsgrund ausgesandten Sensorsignalen ausgebildet ist.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte der Erfindung erläutert werden.

Gemäß einem exemplarischen Ausführungsbeispiel der Erfindung kann ein zum Beispiel als Sensoranker ausgebildetes Messelement geschaffen werden, das als reines Messinstrument konfiguriert sein kann. Anschaulich kann also ein Befestigungselement als Messinstrument eingesetzt werden, ohne selbst eine Befestigungsfunktion erfüllen zu müssen. Ein entsprechendes Messelement kann ein erstes Verankerungsende aufweisen, das im Untergrund fixiert werden kann. Ein zweites Verankerungsende kann ebenfalls im Untergrund fixiert werden oder an einer Oberfläche des Untergrunds fixiert werden. Darüber hinaus kann ein Messabschnitt zwischen dem erstem und dem zweiten Verankerungsende vorgesehen werden. Mindestens ein Sensor kann im Messabschnitt angeordnet werden und zum Erfassen von Verankerungsdaten bzw. Verankerungsparametern ausgebildet werden. Eine Übertragungseinrichtung kann zum Übertragen der Sensordaten an einen Empfänger dienen.

Indem der Sensor außerhalb eines Befestigungsgewindes zum Befestigen des Messelements an dem Untergrund bzw. Verankerungsgrund angebracht wird, sind Sensorfunktion und Befestigungsfunktion vor einer gegenseitigen Störung zuverlässig geschützt. Dies stellt eine saubere Kraftkopplung zwischen Verankerungsgrund und Messelement sicher und garantiert darüber hinaus, dass der Sensor im verankerten Zustand reproduzierbar Sensordaten erfassen kann. Erfasste Sensordaten erlauben es, einen Verankerungsgrund sensorisch zu charakterisieren. Zum Beispiel können auf diese Weise kritische Kraftverhältnisse im Untergrund zügig nach deren Entstehen erkannt werden, sodass rechtzeitig entsprechende Maßnahmen ergriffen werden können.

Beispielsweise kann der Sensor als Temperatursensor, Dehnmessstreifen, Drehmomentsensor, Feuchtigkeitssensor, etc. ausgebildet sein. Ermittelte Verankerungsdaten bzw. Verankerungsparameter können zum Beispiel Temperatur, Dehnung, Drehmoment, Feuchtigkeit und/oder Vibrationen bzw. Schwingungen sein.

Als Übertragungseinrichtung zum Übertragen der Verankerungsdaten kann zum Beispiel eine kabelgebundene Übertragungsleitung verwendet werden, die insbesondere in Harz gegossen sein kann. Alternativ kann hierfür ein Funksender eingesetzt werden, der die Daten bzw. Messwerte via NFC, Bluetooth und/oder WLAN übertragen kann. Von Vorteil kann hierbei sein, dass das Messelement zumindest zum Teil als Übertragungsleitung oder als Antenne fungieren kann.

Ein Empfängergerät kann zum Beispiel zum drahtlosen Kommunizieren via WLAN, Bluetooth und/oder eine Funkantenne gekoppelt werden oder kann kabelgebunden angeschlossen werden. Zum Beispiel kann ein Empfängergerät ein Computer, ein Smartphone, ein Tablet, ein Powertool, oder ein Server sein, der über eine Cloud-Infrastruktur angeschlossen werden kann.

Beispielsweise kann ein solches Empfängergerät empfangene Daten in ein BIM (Building Information Modeling) System exportieren. Die Position des Messelements bzw. Messinstruments kann in einem BIM-System hinterlegt werden.

Es ist auch möglich, beispielsweise in einer Datenbank eine Dokumentation in Form der Verankerungsdaten bzw. Verankerungsparameter zu hinterlegen bzw. zu speichern.

Bei der Auswertung der Verankerungsdaten kann eine Warnung ausgegeben werden, wenn bestimmte Grenzwerte überschritten werden.

Beispielsweise kann das Messelement als Holzschraube, Betonschraube, Betonanker, Ankerstange (insbesondere im Zusammenhang mit einem chemischen Dübel) oder Last-bzw. Zuganker ausgebildet werden.

Das Messelement kann, insbesondere an einem Verankerungsende, ein Befestigungsgewinde in Form eines Betonschraubengewindes oder eines Holzschraubengewindes aufweisen. Zum Beispiel kann das Verankerungsende ein eingeklebtes metrisches Gewinde sein. Der Messabschnitt kann elastisch im Bereich einer zu erwartenden Verformung oder Verzerrung angeordnet werden. Bevorzugt wird der Sensor in einem verjüngten Bereich des Schaftabschnitts und mit Abstand zum Bohrloch angeordnet. Insbesondere kann eine Rampe als Schutz für den mindestens einen Sensor vorgesehen werden, bevorzugt an der verjüngten Stelle des Schaftabschnitts.

Der Sensor kann ausgebildet sein, relative Änderungen zu messen (zum Beispiel bei einer Konfiguration als Dehnmessstreifen, Ultraschallsensor bzw. Induktionssensor). Alternativ kann der Sensor allerdings auch ausgebildet werden, eine absolute Längenänderung zu messen. Dies kann zum Beispiel durch ein Eichen des Sensors (insbesondere eines Dehnmessstreifens) erreicht werden, um eine Langenänderung absolut zu erlassen. Auch mit einem Ultraschallsensor können absolute Längenänderungen erfasst werden. Auch zum Erfassen absoluter Längenänderungen kann allerdings ein Eichen entbehrlich sein. Vorteilhaft ist es aber für eine Messung einer absoluten Längenänderung, dass die Gesamtlänge des dehnbaren Abschnitts des Messelements bzw. des Sensors bekannt ist oder erfasst wird.

Zur Befestigung des ersten und/oder des zweiten Verankerungsendes im Verankerungsgrund kann zum Beispiel eine Verbindung mittels Formschluss, Kraftschluss und/oder Stoffschluss ausgebildet werden.

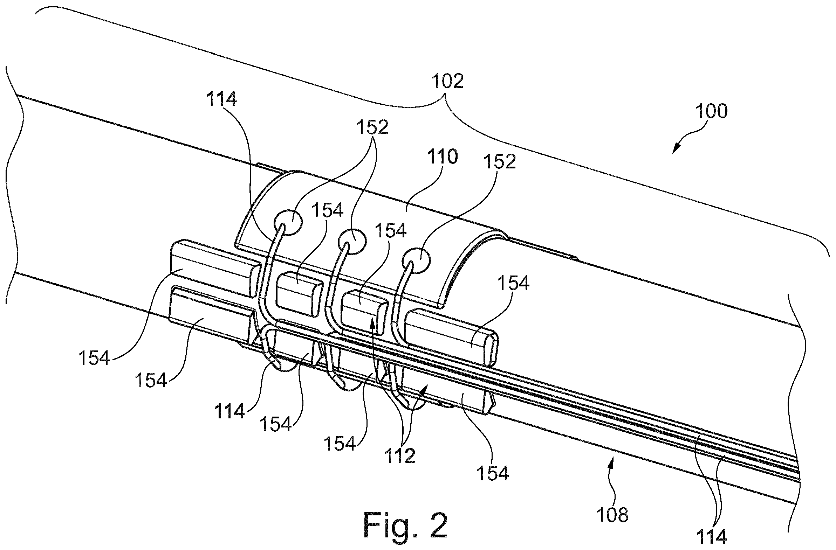

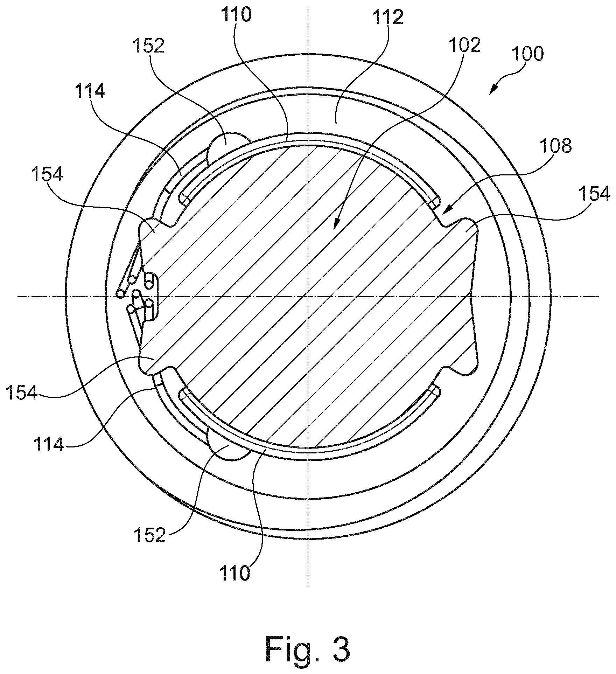

**Figur 1** zeigt ein Messelement 100 gemäß einem exemplarischen Ausführungsbeispiel der Erfindung. **Figur 2** zeigt ein Detail eines solchen Messelements 100. **Figur 3** zeigt eine entsprechende Querschnittsansicht eines Messelements 100.

Genauer gesagt zeigt Figur 1 eine Anordnung 120 mit einem Messelement 100 und einem Empfängergerät 122, das zum Empfangen von mittels eines Sensors 110 des Messelements 100 erfassten Verankerungsdaten kommunizierfähig mit dem Sensor 110 gekoppelt ist. Das Empfängergerät 122 kann zum drahtlosen Kommunizieren mit dem Sensor 110 ausgebildet sein. Gemäß Figur 1 ist das Empfängergerät 122 ein portables Nutzer-Endgerät in Form eines Smartphones.

Das in Figur 1 im Detail dargestellte Messelement 100 weist einen Schaftabschnitt 102 auf. Ein Teilabschnitt des Schaftabschnitts 102 ist gemäß Figur 1 gewindefrei ausgebildet.

Ein erstes Befestigungsende 104 an einem ersten Ende des Schaftabschnitts 102 dient zum Verankern in einem Verankerungsgrund (siehe Bezugszeichen 177 in Figur 9 bis Figur 11), zum Beispiel einer Gebäudewand. Das erste Befestigungsende 104 kann ein Befestigungsgewinde, im gezeigten Ausführungsbeispiel Verankerungsgewinde 116, aufweisen. Besagtes Befestigungsgewinde kann zum Beispiel ein Betonschraubengewinde, ein Holzschraubengewinde oder auch ein metrisches Gewinde sein.

Das Messelement 100 weist darüber hinaus ein zweites Befestigungsende 106 an einem gegenüberliegenden zweiten Ende des Schaftabschnitts 102 auf, das in einem in dem Verankerungsgrund (siehe Bezugszeichen 177 in Figur 9 bis Figur 11) verankerten Zustand an einer Außenseite des Verankerungsgrunds 177 oder ebenfalls in dem Verankerungsgrund 177 zu befestigen ist. Das zweite Befestigungsende 106 ist in einem in dem Verankerungsgrund verankerten Zustand des Messelements 100 an einer Außenseite des Verankerungsgrunds anzuordnen. Das zweite Befestigungsende 106 kann bevorzugt ein weiteres Befestigungsgewinde in Form von Außengewinde 118 aufweisen. Besagtes weiteres Befestigungsgewinde kann beispielsweise ein metrisches Außengewinde sein.

Darüber hinaus enthält das Messelement 100 einen radial verjüngten Verjüngungsabschnitt 108 des Schaftabschnitts 102 axial zwischen dem ersten Befestigungsende 104 und dem zweiten Befestigungsende 106. Genauer gesagt ist der radial verjüngte Verjüngungsabschnitt 108 als ringförmige Aussparung an einer radialen Außenseite des Schaftabschnitts 102 ausgebildet.

In dem Verjüngungsabschnitt 108 versenkt angeordnet sind Sensoren 110 zum Erfassen von Verankerungsdaten des Messelements 100 in dem Verankerungsgrund. Bei Anbringen der Sensoren 110 im Verjüngungsabschnitt 110 befinden sich die Sensoren 110 an der mechanisch schwächsten Stelle des Messelements 100, d.h. im verjüngten Bereich des Schaftzentrums. Diese Sensordaten oder Verankerungsdaten können dazu verwendet werden, eine Beschaffenheit bzw. Kräftekonfiguration im Verankerungsgrund zu überprüfen und langfristig zu überwachen. Die Sensoren 110 können zum Beispiel als Dehnmessstreifen ausgebildet werden, die im Verjüngungsabschnitt 108 auf den Schaftabschnitt 102 aufgeklebt werden können. Beispielsweise können die zum Beispiel als Dehnmessstreifen ausgebildeten Sensoren 110 als Vollbrücke verschaltet sein. Allgemein können die Sensoren 110 zum Erfassen einer Dehnung des Schaftabschnitts 102, eines Drehmoments des Schaftabschnitt 102 und/oder einer Temperatur ausgebildet sein.

Vorteilhaft sind die Sensoren 110 bezüglich der Befestigungsgewinde 116, 118 beabstandet angeordnet, d.h. jenseits der Befestigungsgewinde 116, 118 positioniert. Anders ausgedrückt können die Befestigungsgewinde 116, 118 räumlich getrennt von den Sensoren 110 ausgebildet sein. Dadurch kann sowohl eine Beeinträchtigung eines jeweiligen Sensors 110 durch das jeweilige Befestigungsgewinde 116, 118 als auch eine Störung der Gewindefunktion des jeweiligen Befestigungsgewindes 116, 118 durch den jeweiligen Sensor 110 zuverlässig ausgeschlossen werden.

Mit Vorteil ist an dem Messelement 100 darüber hinaus eine im Weiteren näher beschriebene Schutzeinrichtung 112 zum Schützen der Sensoren 110 vor einer Beschädigung im Betrieb vorgesehen. Die Schutzeinrichtung 112 kann vorteilhaft einen kompressiblen und feuchtigkeitsundurchlässigen Schaum aufweisen. Bevorzugt kann ein solcher Schaum ein aromatisches Isocyanat aufweisen. Besagte Schutzeinrichtung 112 kann in dem radial verjüngten Verjüngungsabschnitt 108 und die Sensoren 110 schützend bedeckend angeordnet sein. Ebenfalls vorteilhaft kann die Schutzeinrichtung 112 umfänglich geschlossen in dem radial verjüngten Verjüngungsabschnitt 108 angeordnet sein. Ferner ist vorteilhaft, wenn die Schutzeinrichtung 112 in dem radial verjüngten Verjüngungsabschnitt 108 bis zu einer solchen radialen Höhe angeordnet ist, dass die Schutzeinrichtung 112 radial nicht über den Schaftabschnitt 102 übersteht. Besonders bevorzugt schließt die Schutzeinrichtung 112 mit dem Schaftabschnitt 102 bündig ab.

Zum Herstellen der Schutzeinrichtung 112 werden die in dem Verjüngungsabschnitt 108 angeordneten Sensoren 110 mit Schaum umspritzt, der auch in den restlichen Verjüngungsabschnitt 108 eingespritzt wird. Während des Spritzens von Schaum kann der Verjüngungsabschnitt 108 von einer Schale (nicht gezeigt) umgeben werden, um die räumliche Erstreckung der Schutzeinrichtung 112 vorzugeben oder zu begrenzen.

Ferner weist das Messelement 100 gemäß Figur 1 eine Übertragungseinrichtung 114 zum Übertragen der Verankerungsdaten von dem Sensor 110 zu dem externen Empfängergerät 122 auf. Wie in Figur 1 gezeigt, kann die Übertragungseinrichtung 114 ein oder mehrere Übertragungskabel aufweisen, das oder die entlang des Schaftabschnitts 102 verlaufend angeordnet ist oder sind. Alternativ oder ergänzend kann die Übertragungseinrichtung 114 auch zum drahtlosen Übertragen der Verankerungsdaten ausgebildet sein. Hierfür kann zum Beispiel als Übertragungstechnologie Near Field Communication (NFC), Bluetooth, Wireless Local Area Network (WLAN), Narrowband Internet of Things (NB-IoT), Long Term Evolution (LTE) und/oder Low Power Wide Area Network (LPWAN) eingesetzt werden.

Wiederum Bezug nehmend auf Figur 1 ist dargestellt, wie das hier als Mobilfunkgerät ausgebildete Empfängergerät 122 kommunizierfähig gekoppelt mit den Sensoren 110 des Messelements 100 ist, siehe das eine Datenübermittlung anzeigende Bezugszeichen 140. Am ersten Befestigungsende 104 ist das Messelement 100 mit dem Verankerungsgewinde 116 ausgestattet, das ein Eindrehen des Messelements 100 in ein Befestigungsloch eines Verankerungsgrunds fördern kann. Am gegenüberliegenden zweiten Befestigungsende 106 ist das Außengewinde 118 ausgebildet, das zum Beispiel ein Aufdrehen einer Befestigungsmutter ermöglichen kann. In einem axialen Zentralabschnitt des Schaftabschnitts 102 befindet sich der als zylindrischer Abschnitt mit abschnittsweise verringertem Außendurchmesser ausgebildete Verjüngungsabschnitt 108, der durch eine ringförmige Aussparung an dem Schaftabschnitt 102 realisiert ist. In diesem radial zurückversetzten Verjüngungsabschnitt 108 sind die hier als Dehnmessstreifen ausgebildeten Sensoren 110 aufgeklebt. Die Sensoren 110 erstrecken sich somit bis zu einer radialen Position, an der diese beim Setzen des Messelements 100 in einen Verankerungsgrund vor einer mechanischen Berührung mit einer Wandung des Verankerungsgrunds geschützt sind. Eine als Kabelverbindung ausgebildete Übermittlungseinrichtung 114 übermittelt die elektrischen Sensorsignale der Sensoren 110 zu dem Empfängergerät 122 außerhalb des Verankerungsgrunds. Die gemäß Figur 1 abschnittsweise kabelgebundene Übermittlungseinrichtung 114 führt die Übermittlungskabel in axialer Richtung an einer Außenseite oder an einer Innenseite des Schaftabschnitts 102 bis ins Äußere des Verankerungslochs. Um die an einer Mantelfläche des Verjüngungsabschnitts 108 angebrachten (zum Beispiel aufgeklebten) Sensoren 110 vor einer mechanischen Beeinträchtigung beim Setzen und danach zu schützen, können die Sensoren 110 mit einem kompressiblen Material umgeben sein, das zum Beispiel mit einer radialen Mantelfläche von gewindefreien Schaftabschnitten 142, 144 bündig oder fluchtend abschließt. Anschaulich sind dadurch die Sensoren 110 in einer kompressiblen Matrix eingebettet, welche die Sensoren 110 vor Beschädigungen schützt und gleichzeitig eine präzise Erfassung von Verankerungsdaten, insbesondere einer mechanischen Dehnung des Schaftabschnitts 102, zulässt.

Mit Bezugszeichen 146 ist in Figur 1 ein Kommunizierende des Messelements 100 dargestellt, an dem eine Übermittlung der sensorisch erfassten Verankerungsdaten an das Empfängergerät 122, kabelgebunden und/oder kabellos, erfolgt. Bei Bezugszeichen 146 kann auch eine Auswerteeinheit zum Anschließen an ein Empfängergerät 122 vorgesehen sein.

In Figur 2 ist ein Detail eines Schaftabschnitts 102 eines Messelements 100 gezeigt, wie es zum Beispiel gemäß Figur 1 oder Figur 4 bis Figur 6 oder Figur 8 ausgebildet sein kann. Elektrische Kabel der Übermittlungseinrichtung 114 können an Sensorpads der Sensoren 110 angeschlossen werden, zum Beispiel mittels Lötkontakten 152. Rippen im Verjüngungsabschnitt 108 können Schutzrampen 154 der Schutzeinrichtung 112 bilden und können so ausgebildet sein, dass in Aussparungen zwischen diesen Rippen die elektrischen Kabel der Übermittlungseinrichtung 114 geführt sind. Dies führt zu einem zusätzlichen Schutz der Sensoren 110 gegen eine Fehlfunktion durch mechanische Beeinträchtigungen.

Die Kabel der Übermittlungseinrichtung 114 können in einer Vertiefung des Schaftabschnitts 102 geführt sein. Dadurch kann der Schutz der Kabel vor mechanischer Beeinträchtigung weiter verbessert werden. Vorteilhaft kann nach Einlegen der Kabel in die Vertiefung die Vertiefung mit Harz befüllt werden. Außerhalb der Vertiefung geführte Kabelabschnitte können durch eine Schaummasse geschützt werden, welche auch die Sensoren 110 schützend umgibt. Ein solcher kompressibler Schaum der Schutzeinrichtung 112 kann mantelseitige Kräfte (zum Beispiel von aushärtendem Mörtel) aufnehmen und dadurch die Sensoren 110 vor artifiziellen Krafteinflüssen schützen. Anders ausgedrückt kann die Schutzeinrichtung 112 ausgebildet werden, um von dem Verankerungsgrund auf den Verjüngungsabschnitt 108 mantelflächig einwirkende Kräfte von dem oder den Sensoren 110 abzuschirmen. Dadurch können die Sensoren 110 vor einer unerwünschten Beeinflussung geschützt werden und lediglich Kräfte von Interesse, insbesondere auf das Messelement 100 einwirkende Zugspannungen, erfassen.

Anhand der Querschnittsansicht von Figur 3 ist gut erkennbar, wie bei der Konfiguration gemäß Figur 2 die in Radialrichtung zurückversetzten Sensoren 110 gegen Beschädigung geschützt sind und durch die Schutzeinrichtung 112 eine zusätzliche Sicherung gegen Beschädigung erfahren.

Das Messelement 100 gemäß Figur 1 kann als Gewindestange oder als Ankerstange für einen chemischen Dübel eingesetzt werden. Beispielsweise kann das Messelement 100 gemäß Figur 1 als Gewindestange oder Zugstab fungieren. Das erste Befestigungsende 104 kann in ein vorgebohrtes Bohrloch mit Mörtel eingeklebt werden. Am zweiten Befestigungsende 106 kann zum Beispiel eine Mutter (nicht dargestellt in Figur 1) aufgeschraubt werden, um das Messelement 100 am Verankerungsgrund zu verspannen. Alternativ kann das Messelement 100 gemäß Figur 1 zum Beispiel auch zum Verspannen zwischen zwei Stahlseilen zum Einsatz kommen.

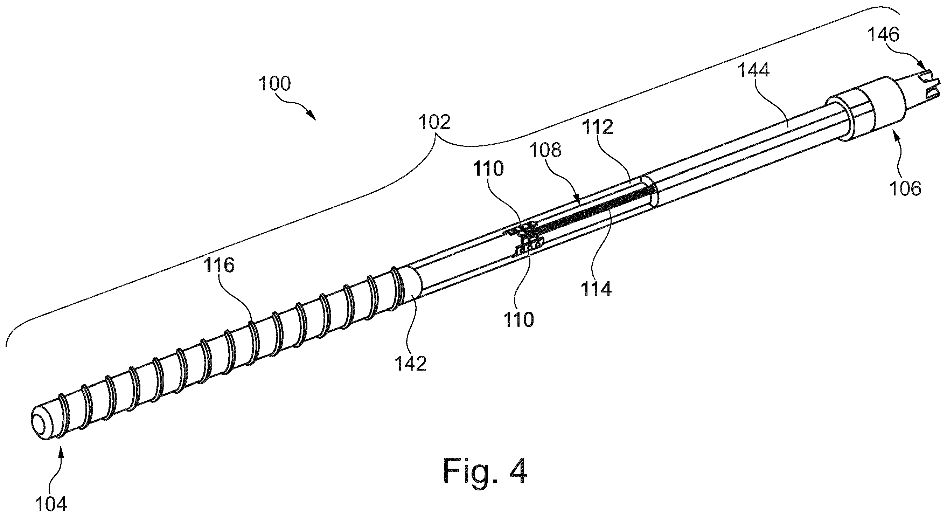

**Figur 4** zeigt ein Messelement 100 gemäß einem anderen exemplarischen Ausführungsbeispiel der Erfindung.

Das Messelement 100 gemäß Figur 4 ist als Holzschraube ausgebildet. Das Messelement 100 gemäß Figur 4 kann ohne Mörtel gesetzt werden.

Das Messelement 100 gemäß Figur 4 unterscheidet sich von dem Messelement 100 gemäß Figur 1 insbesondere dadurch, dass gemäß Figur 4 das Verankerungsgewinde 116 eine andere Steigung aufweist als gemäß Figur 1 und dass gemäß Figur 4 das Außengewinde 116 weggelassen ist. Somit eignet sich das Messelement 100 gemäß Figur 4 insbesondere zum Eindrehen in einen Verankerungsgrund (nicht gezeigt) mit vorgebohrtem Verankerungsloch.

Alternativ zu Figur 4 kann ein als Holzschraube ausgebildetes Messelement 100 gemäß einem anderen Ausführungsbeispiel der Erfindung am ersten Befestigungsende 104 mit einer Bohrspitze ausgebildet sein und dann vorbohrungsfrei in einen Verankerungsgrund (vorzugsweise aus Holz) eingebracht werden.

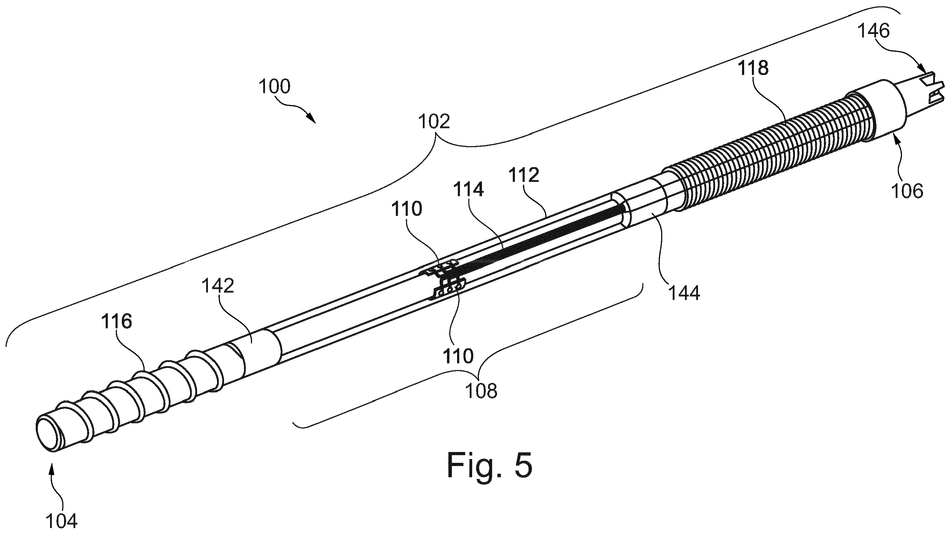

**Figur 5** zeigt ein Messelement 100 gemäß einem weiteren exemplarischen Ausführungsbeispiel der Erfindung.

Das Messelement 100 gemäß Figur 5 ist als Sensoranker oder als Betonschraube konfiguriert.

Das in Figur 5 dargestellte Messelement 100 unterscheidet sich von dem Ausführungsbeispiel gemäß Figur 4 insbesondere dadurch, dass gemäß Figur 5 am zweiten Befestigungsende 106 ein metrisches Außengewinde 118, zum Beispiel zum Verspannen mittels einer nicht dargestellten Mutter vorgesehen ist.

Am ersten Befestigungsende 104 kann das Messelement 100 gemäß Figur 5 in ein vorgebohrtes Loch in einem zum Beispiel aus Beton ausgebildeten Verankerungsgrund eingeschraubt werden. Das Verankerungsgewinde 116 gemäß Figur 5 kann somit ein Betongewinde sein. Zwischen einer Wandung des Verankerungsgrunds und dem Messelement 100 kann Mörtel zum Einkleben verwendet werden.

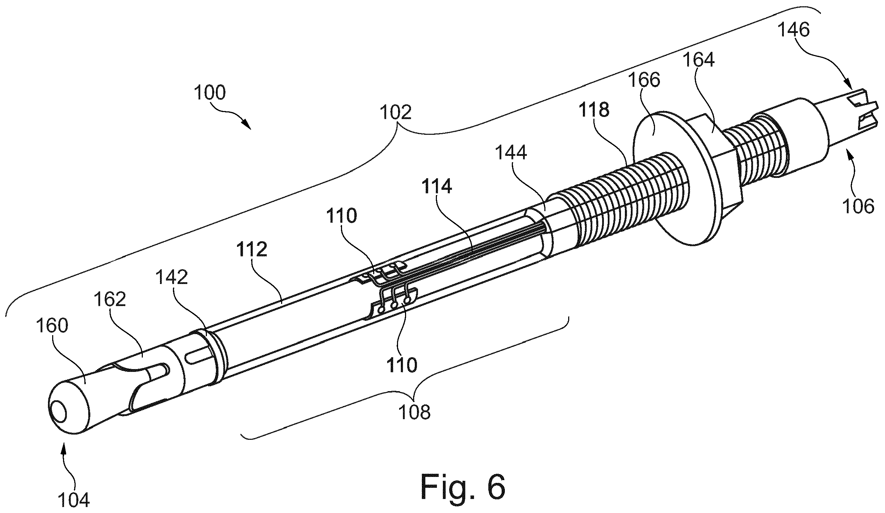

**Figur 6** zeigt ein Messelement 100 gemäß noch einem anderen exemplarischen Ausführungsbeispiel der Erfindung.

Das Messelement 100 gemäß Figur 6 ist als Bolzenanker, zum Beispiel als Betonanker, ausgebildet. Der Bolzenanker gemäß Figur 6 kann mit oder ohne Mörtel in einer Vorbohrung in einem Verankerungsgrund gesetzt werden.

Bei dem als Bolzenanker ausgebildeten Messelement 100 gemäß Figur 6 ist am ersten Befestigungsende 104 ein Konuskörper 160 gebildet, der sich vom ersten Befestigungsende 104 zum zweiten Befestigungsende 106 hin radial verjüngt. Verschiebbar auf dem Schaftabschnitt 102 im Bereich des Konuskörpers 160 (der auch als Spreizkörper bezeichnet werden kann) befindet sich eine axial verschiebbare Spreizhülse 162, zum Beispiel aus einem Metall wie Edelstahl. Im Bereich des zweiten Befestigungsendes 106 ist ein Außengewinde 118 angebracht, auf dem eine Mutter 164 (optional gemeinsam mit einer Beilagscheibe 166) zum Setzen des Messelements 100 aufgedreht werden kann. Um das Messelement 100 gemäß Figur 6 in einem insbesondere vorgebohrten Verankerungsloch in einem Verankerungsgrund (zum Beispiel aus Beton) zu setzen, wird das Messelement 100 zunächst ohne Mutter 164 (und der optionalen Beilagscheibe 166) in das Verankerungsloch eingeschlagen, das heißt unter Einwirkung einer axialen Kraft. Dadurch wird das erste Befestigungsende 104 in einem Bohrlochinneren angeordnet. Nachfolgend kann die Befestigungsmutter 164 (optional nach Aufsetzen der Beilagscheibe 166) von außen auf das Außengewinde 118 aufgedreht werden. Erreichen Befestigungsmutter 164 und die optionale Beilagscheibe 166 eine Außenfläche des Verankerungsgrunds, bewirkt ein weiteres Aufdrehen der Befestigungsmutter 164 eine Relativkraft in axialer Richtung zwischen Konuskörper 160 und Spreizhülse 162, die dazu führt, dass sich die Spreizhülse 162 in axialer Richtung auf dem Konuskörper 160 bewegt, wodurch sich die Spreizhülse 162 mit der Wandung des Verankerungsgrunds verspreizt. Dadurch wird ein Setzvorgang abgeschlossen. Während dieses Setzvorgangs und danach können mittels der Sensoren 110 Verankerungsdaten erfasst werden, die den Verankerungsvorgang und/oder den Verankerungszustand dokumentieren. Beispielsweise kann eine übermäßige mechanische Spannung am Ort der Sensoren 110 auf eine übermäßige mechanische Last im Verankerungsgrund hindeuten. Indem die Sensoren 110 in dem Verjüngungsabschnitt 108 radial zurückversetzt sind und durch die Schutzeinrichtung 112 (zum Beispiel ausgebildet als kompressibler Schaum) mechanisch geschützt sind, kann ein ungehinderter Setzvorgang mit einer zuverlässigen Sensorfunktion kombiniert werden.

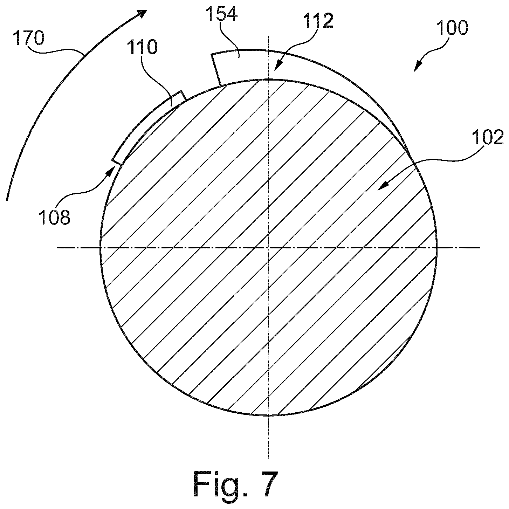

**Figur 7** zeigt eine Querschnittsansicht eines Messelements 100 gemäß einem weiteren exemplarischen Ausführungsbeispiel der Erfindung.

Wie in Figur 7 dargestellt, kann die Schutzeinrichtung 112 eine Schutzrampe 154 aufweisen, die in einer Einschraubrichtung 170 des Messelements 100 hinter dem Sensor 110 angeordnet ist. Die Schutzrampe 154 kann in dem radial verjüngten Verjüngungsabschnitt 108 angeordnet werden.

Der Querschnittsansicht gemäß Figur 7 ist zu entnehmen, wie ein jeweiliger Sensor 110 in Bezug auf die Schutzrampe 154 angeordnet ist, wenn das Messelement 100 durch Drehen entlang Drehrichtung bzw. Einschraubrichtung 170 drehend in einem Verankerungsgrund gesetzt wird. Hierbei ist anzumerken, dass die Einschraubrichtung 170 durch die Gewinderichtung eines Verankerungsgewindes 116 definiert sein kann. Wie Figur 7 zu entnehmen ist, ist die als Rippe ausgebildete Schutzrampe 154 der Schutzeinrichtung 112 so angeordnet, dass sich der radial äußerste Abschnitt der Schutzrampe 154 in Setzrichtung an den Sensor 110 anschließt. Der Radius der Schutzrampe 154 nimmt dann ausgehend von dem zentrumsfernsten Punkt im Grenzbereich zu dem Sensor 110 kontinuierlich ab und mündet stetig in den Verjüngungsabschnitt 108. Durch diese Konfiguration befindet sich der Sensor 110 anschaulich in einem Abschirmungsbereich, der durch den achsenferneren und dem Sensor 110 zugewandten Bereich der Schutzrampe 154 definiert ist. Die Schutzrampe 154 kann zum Beispiel aus Metall hergestellt sein. Ohne Schutzrampen 154 kann es unter Umständen zu unerwünscht starken Kerbeffekten kommen. Das Vorsehen von einer oder mehreren Schutzrampen 154 kann zudem vorteilhaft bewirken, dass einen jeweiligen Sensor 110 umschließender Schaum der Schutzeinrichtung 112 sich an den ansonsten glatten Verjüngungsabschnitt 108 besser anlegt und besser anhaftet.

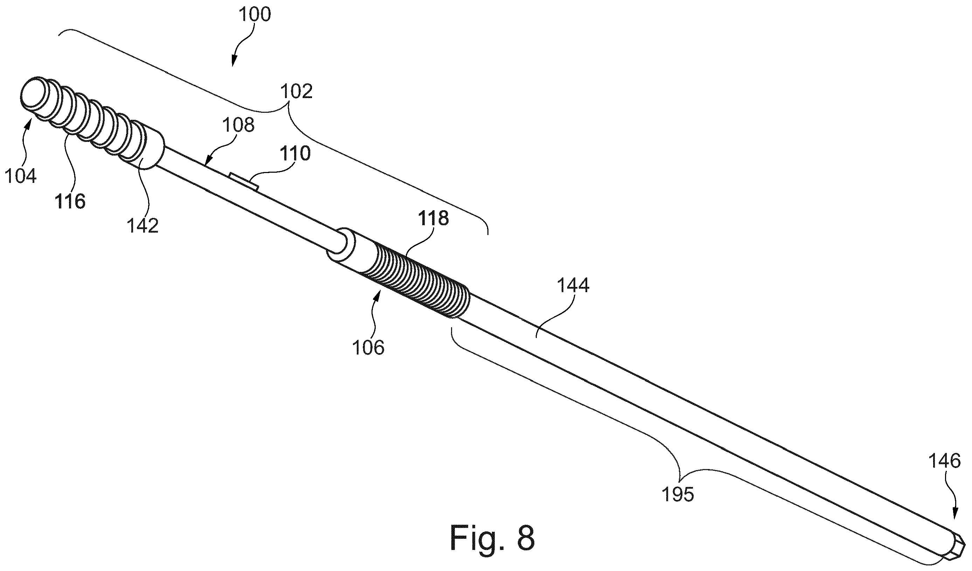

**Figur 8** zeigt ein Messelement 100 gemäß noch einem anderen exemplarischen Ausführungsbeispiel der Erfindung.

Gemäß Figur 8 ist an dem zweiten Befestigungsende 106 des Schaftabschnitts 102 ein langgestreckter gewindefreier Bolzenabschnitt als Verlängerungsabschnitt 195 einstückig angeschlossen. Der Verlängerungsabschnitt 195 erstreckt sich ausgehend von dem metrischen Außengewinde 118 bis zu dem Kommunizierende 146 des Messelements 100 hin. Somit weist gemäß Figur 8 das Messelement 100 den dargestellten Verlängerungsabschnitt 195 auf, der sich ausgehend von dem zweiten Befestigungsende 106 des Schaftabschnitts 102 bis zu einem äußeren Ende des Befestigungselements 100 erstreckt, um dadurch das Messelement 100 über das zweite Befestigungsende 106 des Schaftabschnitts 102 hinaus zu verlängern. Am metrischen Außengewinde 118 kann zum Beispiel eine (nicht gezeigte) Mutter montiert werden, um das Messelement 100 an einem Verankerungsgrund zu verspannen. Beispielsweise kann der Verlängerungsabschnitt 195 mehr als 20 % oder sogar mehr als die Hälfte der Gesamtlänge des Meselements 100 ausmachen. Der langgestreckte Verlängerungsabschnitt 195 erlaubt es, das Messelement 100 weit aus dem Verankerungsgrund hervorstehen zu lassen. Alternativ oder ergänzend ist es möglich, einen Verlängerungsabschnitt 195 am ersten Befestigungsende 104 des Schaftabschnitts 102 anzubringen 104 (nicht gezeigt).

Figur 9 bis Figur 11 zeigen in einem Verankerungsgrund 177 gesetzte Messelemente 100 gemäß Vergleichsbeispielen, bei denen ein Sensor 110 stirnseitig an einem ersten Befestigungsende 104 angeordnet ist. Genauer gesagt ist gemäß Figur 9 bis Figur 11 der Sensor 110 an einer Stirnfläche 199 des Schaftabschnitts 102 des Messelements 100 angebracht. Der Sensor 110 dient zum Erfassen von Sensorsignalen, die von einem stirnseitig in dem Verankerungsgrund 177 angebrachten Sensorgegenstück 179 empfangen werden, das räumlich getrennt von dem Sensor 110 lokalisiert ist.

Gemäß **Figur 9** ist eine Anordnung 120 mit einem Verankerungsgrund 177 und einem darin gesetzten Messelement 100 dargestellt. Der Verankerungsgrund 177 kann zum Beispiel eine Betonwand sein, in die ein Verankerungssackloch 189 eingebracht ist. Gemäß Figur 9 ist das Messelement 100 aus mehreren getrennten Komponenten gebildet, nämlich einem Schaftabschnitt 102 mit Sensor 110 als erste Komponente und einem davon körperlich getrennten Sensorgegenstück 179 als zweite Komponente. Das Sensorgegenstück 179 kann zum Beispiel als Plättchen oder Scheibe ausgebildet sein, das bzw. die auf eine Stirnfläche 191 des Verankerungssacklochs 189 aufgeklebt wird. Beispielsweise kann das Sensorgegenstück 179 in das Verankerungssackloch 189 mittels eines in der Figur nicht dargestellten Montagestabs eingeschoben werden. Danach kann gemäß Figur 9 der Schaftabschnitt 102 samt Sensor 110 mittels des Verankerungsgewindes 116 in das Verankerungssackloch 189 eingeschraubt werden und mit einer Mutter 164 verspannt werden. Im montierten Zustand ist die Mutter 164 auf das Verankerungsgewinde 116 am Schaftabschnitt 102 aufgeschraubt und liegt auf einer Außenfläche des Verankerungsgrunds 177 an. Anschaulich sichert die Mutter 164 den Schaftabschnitt 102 gegen ein Hineinrutschen in das Verankerungssackloch 189. Zuvor kann optional noch ein Hohlraum des Verankerungssacklochs 189 mit einem optisch transparenten Verfüllmaterial 189 verfüllt werden, um die strukturelle Integrität des Verankerungsgrunds 177 zu verbessern. Im montierten Zustand ist das Sensorgegenstück 179 von dem Sensor 110 um einen axialen Abstand "D" beabstandet. Somit ist bei dem Messelement 100 gemäß Figur 9 der Schaftabschnitt 102 samt Sensor 110 um einen Abstand "D" von dem an der Stirnfläche 191 des Verankerungssacklochs 189 angebrachten Sensorgegenstück 179 entfernt.

Genauer gesagt ist der Sensor 110 an der Stirnfläche 199 des ersten Befestigungsendes 104 des Schaftabschnitts 102 angeordnet ist, sodass der Sensor 110 von dem Verankerungsgewinde 116 räumlich getrennt ist. Der Sensor 110 dient zum Erfassen von für die Verankerungsdaten indikativen Signalen von dem separat bzw. getrennt von dem Schaftabschnitt 102 in dem Verankerungsgrund 177 angebrachten Sensorgegenstück 179 des Messelements 100.

In dem Vergleichsbeispielgemäß Figur 9 weist das Sensorgegenstück 179 einen an dem Verankerungsgrund 177 angebrachten Antwortsignalgenerator zum Generieren von Antwortsignalen als Antwort auf von dem als Signalquelle ausgebildeten Sensor 110 empfangenen Sensorsignalen auf. Der Sensor 110 erzeugt also Sensorsignale, die zum Sensorgegenstück 179 propagieren. Die Sensorsignale geraten dadurch in Wechselwirkung mit dem Sensorgegenstück 179 und werden dabei in Abhängigkeit von der Beschaffenheit des Verankerungsgrunds 177, an dem das Sensorgegenstück 179 fest montiert ist, charakteristisch modifiziert. Treten beispielsweise am Verankerungsgrund 177 seismische Schwingungen auf, so prägen diese dem modifizierten Sensorsignal einen entsprechenden Fingerabdruck auf, aus dem sich Informationen über die seismischen Schwingungen ableiten lassen. Die modifizierten Sensorsignale propagieren als Antwortsignale zurück zu dem Sensor 110, wo sie detektiert werden. Besagte Antwortsignale werden also von dem Sensor 110 empfangen. Das als Antwortsignalgenerator ausgebildete Sensorgegenstück 179 fungiert hierbei als Signalreflektor zum Reflektieren von von dem Sensor 110 ausgesandten Sensorsignalen.

Der als Signalquelle ausgebildete Sensor 110 hat zum Beispiel eine nicht gezeigte Lichtquelle (zum Beispiel eine Leuchtdiode) zum Aussenden von optischen Sensorsignalen. Die optischen Sensorsignale propagieren vom Sensor 110 zum Sensorgegenstück 179. Das Sensorgegenstück 179 ist im dargestellten Ausführungsbeispiel ein optischer Reflektor oder Spiegel, der die von der Lichtquelle emittierten optischen Sensorsignale als optische Antwortsignale zum Sensor 110 reflektiert bzw. zurückspiegelt. Die optischen Antwortsignale werden von einem nicht gezeigten lichtempfindlichen Element (zum Beispiel eine Fotozelle oder ein Array von Fotozellen) des Sensors 110 detektiert.

Ändern sich, zum Beispiel über eine lange Zeit hinweg oder auch schlagartig (zum Beispiel im Falle eines Erdbebens), die Kraftverhältnisse im Verankerungsgrund 177, so ändert sich statisch oder dynamisch auch der Abstand D zwischen Sensor 110 und Sensorgegenstück 179. Dies kann gemäß Figur 9 optisch erfasst werden. Auf diese Weise ist es möglich, Verankerungsdaten zum Charakterisieren der Kraftverhältnisse im Verankerungsgrund 177 zu erhalten.

Wie bereits beschrieben, kann ein Hohlraum des Verankerungssacklochs 189 zwischen dem Sensorgegenstück 179 und dem Schaftabschnitt 102 samt Sensor 110 mit einem für das Signal transparenten Verfüllmaterial 193 verfüllt sein. Für das beschriebene Beispiel eines optischen Signals kann das Verfüllmaterial 193 optisch transparent sein. Dadurch kann sichergestellt werden, dass durch das Verfüllen die optische Detektion nicht beeinträchtigt wird. Die Verfüllung von Hohlräumen im Verankerungsgrund 177 hat den Vorteil einer besonders gut reproduzierbaren sensorischen Erfassung und einer hohen und ungestörten Stabilität des Verankerungsgrunds 177 ungeachtet der Implementierung des Messelements 100.

Es ist auch möglich, den Hohlraum im Verankerungsgrund 177 mit einem optisch opaken Verfüllmaterial 193 zu verfüllen und zur optischen Kopplung des Sensors 110 mit dem Sensorgegenstück 179 zwischen Sensor 110 und Sensorgegenstück 179 einen Lichtleiter anzubringen (nicht gezeigt).

Gemäß Figur 9 wird also ein hier als Reflektor ausgebildetes Sensorgegenstück 179 an Ende eines hier als Bohrloch ausgebildeten Verankerungssacklochs 189 befestigt, zum Beispiel durch Kleben. Das Messelement 100 mit integriertem Sensor 110 dient als Sender und Empfänger und wird im Bohrloch formschlüssig, kraftschlüssig und/oder stoffschlüssig eingebracht. Die beschriebene Konfiguration kann zum Messen der Distanzänderung zwischen Sensor 110 und Sensorgegenstück 179 eingesetzt werden. Vom Sensor 110 erhaltene Daten können zum Beispiel über Kabel oder Funk ausgegeben werden.

Alternativ oder ergänzend zu Figur 9 ist es auch möglich, statt optischen Signalen akustische Sensorsignale (zum Beispiel Ultraschall-Sensorsignale) und/oder elektrische Sensorsignale (beispielsweise Strom-Sensorsignale) durch Zusammenwirken von Sensor 110 und Sensorgegenstück 179 zu generieren und sensorisch zu erfassen. Bei der Verwendung von Ultraschall ist es zum Beispiel möglich, das Sensorgegenstück 179 als schwingfähiges Plättchen auszubilden. Wird eine Induktionsquelle in Form von elektrischem Strom eingesetzt, kann das Sensorgegenstück 179 zum Beispiel eine Spule aufweisen. Auch andere Sensorprinzipien können auf die beschriebene Weise implementiert werden.

Gemäß einer weiteren Alternative ist es möglich, dass das Sensorgegenstück 179 eine an dem Verankerungsgrund 177 anzubringende aktive Signalquelle zum Aussenden von Signalen ist. Diese Signale können dann durch den Sensor 110 detektiert und zum Erhalten von Verankerungsdaten ausgewertet werden.

Gemäß **Figur 10** ist ein Vergleichsbeispieldargestellt, das sich von Figur 9 dadurch unterscheidet, dass gemäß Figur 10 keine Mutter 164 vorgesehen ist. Der Schaftabschnitt 102 wird in das Verankerungssackloch 189 so tief hineingeschoben, bis eine außenseitige Stirnfläche 198 des Schaftabschnitts 102 mit einer Außenfläche 196 des Verankerungsgrunds 177 bündig oder flächig abschließt. Die Verbindung zwischen Schaftabschnitt 102 und Verankerungsgrund 177 kann zum Beispiel durch eine Schraubverbindung, eine Presspassung oder durch Klebemörtel erfolgen.

Das Vergleichsbeispielgemäß **Figur 11** unterscheidet sich von jenem gemäß Figur 10 dadurch, dass gemäß Figur 11 das Messelement 100 tiefer in den Verankerungsgrund 177 eingeführt ist, um den Abstand "D" kleiner als gemäß Figur 10 einzustellen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Messelement (100), aufweisend:
einen Schaftabschnitt (102) mit mindestens einem Befestigungsgewinde (116, 118);
ein erstes Befestigungsende (104) an einem ersten Ende des Schaftabschnitts (102) zum Befestigen in einem Verankerungsgrund (177);
einen zu dem Befestigungsgewinde (116, 118) beabstandet angeordneten Sensor (110) zum Erfassen von Verankerungsdaten des Messelements (100) in dem Verankerungsgrund (177), wobei der Sensor (110) an einem radial verjüngten Verjüngungsabschnitt (108) des Schaftabschnitts (102) angeordnet ist, wobei der radial verjüngte Verjüngungsabschnitt (108) als ringförmige Aussparung an einer radialen Außenseite des Schaftabschnitts (102) ausgebildet ist;
eine Übertragungseinrichtung (114) zum Übertragen der Verankerungsdaten von dem Sensor (110) zu einem externen Empfängergerät (122); und
eine Schutzeinrichtung (112) zum Schützen des Sensors (110),
**dadurch gekennzeichnet, dass**
die Schutzeinrichtung (112) umfänglich geschlossen in dem radial verjüngten Verjüngungsabschnitt (108) angeordnet ist und den Sensor (110) schützend bedeckt.

2. Messelement (100) gemäß Anspruch **1,** wobei das erste Befestigungsende (104) mindestens ein Befestigungsgewinde (116) des mindestens einen Befestigungsgewindes (116, 118) aufweist.

3. Messelement (100) gemäß Anspruch 1 oder 2, aufweisend ein zweites Befestigungsende (106) an einem dem ersten Ende gegenüberliegenden zweiten Ende des Schaftabschnitts (102), das in einem in dem Verankerungsgrund (177) verankerten Zustand an einer Außenseite des Verankerungsgrunds (177) oder in dem Verankerungsgrund (177) zu befestigen ist, wobei das mindestens eine Befestigungsgewinde (116, 118) ein Außengewinde (118) am zweiten Befestigungsende (106) aufweist, insbesondere ein metrisches Außengewinde.

4. Messelement (100) gemäß Anspruch 3, wobei das zweite Befestigungsende (104) mindestens ein Befestigungsgewinde (118) des mindestens einen Befestigungsgewindes (116, 118) aufweist.

5. Messelement (100) gemäß einem der Ansprüche 1 bis 4, wobei der Sensor (110) mantelseitig, an dem Schaftabschnitt (102) angeordnet ist.

6. Messelement (100) gemäß einem der Ansprüche 1 bis 5, aufweisend zumindest eines der folgenden Merkmale:
wobei die Übertragungseinrichtung (114) mindestens ein Übertragungskabel aufweist, das zumindest abschnittsweise entlang des Schaftabschnitts (102) verlaufend angeordnet ist;
wobei die Übertragungseinrichtung (114) zum drahtlosen Übertragen der Verankerungsdaten ausgebildet ist, insbesondere mittels zumindest einer Technologie aus einer Gruppe bestehend aus Near Field Communication, Bluetooth, Wireless Local Area Network, Narrowband Internet of Things, Long Term Evolution und Low Power Wide Area Network;
wobei der Sensor (110) zum Erfassen von zumindest einem Parameter aus einer Gruppe ausgebildet ist, die besteht aus Zugspannung, Dehnung, Drehmoment und Temperatur;
wobei der Sensor (110) einen Dehnmessstreifen aufweist;
aufweisend zumindest einen weiteren Sensor (110) zum Erfassen von weiteren Verankerungsdaten des Messelements (100) in dem Verankerungsgrund (177);
wobei die Schutzeinrichtung (112) kompressibles Material aufweist, insbesondere einen kompressiblen Schaum;
wobei die Schutzeinrichtung (112) feuchtigkeitsundurchlässiges Material aufweist, insbesondere einen feuchtigkeitsundurchlässigen Schaum;
wobei die Schutzeinrichtung (112) ausgebildet ist, von dem Verankerungsgrund (177) auf den Verjüngungsabschnitt (108) mantelflächig einwirkende Kräfte von dem Sensor (110) abzuschirmen;
wobei die Schutzeinrichtung (112) in dem radial verjüngten Verjüngungsabschnitt (108) bis zu einer solchen radialen Höhe angeordnet ist, dass die Schutzeinrichtung (112) radial nicht über den Schaftabschnitt (102) übersteht, insbesondere mit dem Schaftabschnitt (102) bündig abschließt;
wobei die Schutzeinrichtung (112) mindestens eine Schutzrampe (154) aufweist, die bezogen auf eine Einschraubrichtung (170) des Messelements (100) umfänglich hinter dem Sensor (110) angeordnet ist, insbesondere zumindest teilweise in dem radial verjüngten Verjüngungsabschnitt (108);
wobei das mindestens eine Befestigungsgewinde (116, 118) ein Verankerungsgewinde (116) am ersten Befestigungsende (104) aufweist, insbesondere ein Betonschraubengewinde, ein Holzschraubengewinde oder ein metrisches Gewinde;
ausgebildet als Holzschraube;
ausgebildet als Betonschraube;
ausgebildet als Bolzenanker, insbesondere als Betonanker;
ausgebildet als Ankerstange, insbesondere für einen chemischen Dübel;
ausgebildet als Kunststoffdübel, insbesondere für eine Holzschraube;
wobei der Sensor (110) zum Erfassen von Verankerungsdaten ausgebildet ist, die relative Information und/oder absolute Information betreffend einen Messparameter enthalten.

7. Messelement (100) gemäß einem der Ansprüche 1 bis 6, aufweisend mindestens einen langgestreckten Verlängerungsabschnitt (195), der sich ausgehend von zumindest einem des ersten Befestigungsendes (104) des Schaftabschnitts (102) und des zweiten Befestigungsendes (106) des Schaftabschnitts (102) bis zu einem Ende des Messelements (100) erstreckt.

8. Anordnung (120), aufweisend:
ein Messelement (100) gemäß einem der Ansprüche 1 bis 7; und
ein Empfängergerät (122), das zum Empfangen von mittels des Sensors (110) erfassten Verankerungsdaten kommunizierfähig mit dem Sensor (110) gekoppelt oder koppelbar ist.

9. Anordnung (120) gemäß Anspruch 8, wobei das Empfängergerät (122) zum drahtlosen Kommunizieren mit dem Sensor (110) ausgebildet ist.

10. Anordnung (120) gemäß Anspruch 8 oder 9, wobei das Empfängergerät (122) aus einer Gruppe ausgewählt ist, die besteht aus einem Router, einem Computer und einem portablen Nutzer-Endgerät, insbesondere einem Smartphone oder einem Tablet.

11. Anordnung (120) gemäß einem der Ansprüche 8 bis 10, aufweisend den Verankerungsgrund (177) mit einem Verankerungssackloch (189), in dem das Messelement (100) zumindest teilweise verankert ist.

12. Verfahren zum Herstellen eines Messelements (100), wobei das Verfahren aufweist:
Ausbilden eines ersten Befestigungsendes (104), zum Verankern in einem Verankerungsgrund (177), an einem ersten Ende eines mit mindestens einem Befestigungsgewinde (116, 118) versehenen Schaftabschnitts (102);
Anordnen eines zu dem mindestens einen Befestigungsgewinde (116, 118) beabstandeten Sensors (110) an dem Messelement (100) zum Erfassen von Verankerungsdaten des Messelements (100) in dem Verankerungsgrund (177), wobei der Sensor (110) an einem radial verjüngten Verjüngungsabschnitt (108) des Schaftabschnitts (102) angeordnet wird, wobei der radial verjüngte Verjüngungsabschnitt (108) als ringförmige Aussparung an einer radialen Außenseite des Schaftabschnitts (102) ausgebildet wird;
Ausbilden einer Übertragungseinrichtung (114) zum Übertragen der Verankerungsdaten von dem Sensor (110) zu einem externen Empfängergerät (122); und
Ausbilden einer Schutzeinrichtung (112) zum Schützen des Sensors (110), **dadurch gekennzeichnet, dass**
die Schutzeinrichtung (112) umfänglich geschlossen in dem radial verjüngten Verjüngungsabschnitt (108) angeordnet wird und den Sensor (110) schützend bedeckt.

## Claims

1. A measuring element (100), comprising:
a shaft portion (102) having at least one fastening thread (116, 118);
a first fastening end (104) at a first end of the shaft portion (102) for fastening in an anchoring ground (177);
a sensor (110) arranged at a distance from the fastening thread (116, 118) for detecting anchoring data of the measuring element (100) in the anchoring ground (177), wherein the sensor (110) is arranged at a radially tapered tapering portion (108) of the shaft portion (102), wherein the radially tapered tapering portion (108) is formed as an annular recess at a radially outer side of the shaft portion (102);
a transmission device (114) for transmitting the anchoring data from the sensor (110) to an external receiver device (122); and
a protection device (112) for protecting the sensor (110),
**characterized in that**
the protection device (112) is arranged in a circumferentially closed manner in the radially tapered tapering portion (108) and protectively covers the sensor (110).

2. The measuring element (100) according to claim 1, wherein the first fastening end (104) comprises at least one fastening thread (116) of the at least one fastening thread (116, 118).

3. The measuring element (100) according to claim 1 or 2, comprising a second fastening end (106) at a second end of the shaft portion (102) opposite the first end, which is to be fastened in a state anchored in the anchoring ground (177) at an outer side of the anchoring ground (177) or in the anchoring ground (177), wherein the at least one fastening thread (116, 118) comprises an external thread (118) at the second fastening end (106), in particular a metric external thread.

4. The measuring element (100) according to claim 3, wherein the second fastening end (104) comprises at least one fastening thread (118) of the at least one fastening thread (116, 118).

5. The measuring element (100) according to any one of claims 1 to 4, wherein the sensor (110) is arranged on the shaft portion (102) on the lateral side.

6. The measuring element (100) according to any one of claims 1 to 5, comprising at least one of the following features:
wherein the transmission device (114) comprises at least one transmission cable which is arranged so as to run at least in portions along the shaft portion (102);
wherein the transmission device (114) is designed for wirelessly transmitting the anchoring data, in particular by means of at least one technology from a group consisting of Near Field Communication, Bluetooth, Wireless Local Area Network, Narrowband Internet of Things, Long Term Evolution and Low Power Wide Area Network;
wherein the sensor (110) is designed for detecting at least one parameter from a group consisting of tensile stress, elongation, torque and temperature;
wherein the sensor (110) comprises a strain gauge;
comprising at least one further sensor (110) for detecting further anchoring data of the measuring element (100) in the anchoring ground (177);
wherein the protection device (112) comprises compressible material, in particular a compressible foam;
wherein the protection device (112) comprises moisture-impermeable material, in particular a moisture-impermeable foam;
wherein the protection device (112) is designed to shield forces acting from the anchoring ground (177) on the tapering portion (108) from the sensor (110);
wherein the protection device (112) is arranged at least partially in the radially tapered tapering portion (108);
wherein the protection device (112) is arranged in the radially tapered tapering portion (108) up to such a radial height that the protection device (112) does not protrude radially beyond the shaft portion (102), in particular terminates flush with the shaft portion (102);
wherein the protection device (112) comprises at least one protection ramp (154) which is arranged circumferentially behind the sensor (110) with respect to a screwing-in direction (170) of the measuring element (100), in particular at least partially in the radially tapered tapering portion (108);
wherein the at least one fastening thread (116, 118) comprises an anchoring thread (116) at the first fastening end (104), in particular a concrete screw thread, a wood screw thread or a metric thread;
designed as a wood screw;
designed as a concrete screw;
designed as a bolt anchor, in particular as a concrete anchor;
designed as an anchor rod, in particular for a chemical dowel;
designed as a plastic dowel, in particular for a wood screw;
wherein the sensor (110) is designed for detecting anchoring data containing relative information and/or absolute information relating to a measuring parameter.

7. The measuring element (100) according to any one of claims 1 to 6, comprising at least one elongated extension portion (195) extending from at least one of the first fastening end (104) of the shaft portion (102) and the second fastening end (106) of the shaft portion (102) to an end of the measuring element (100).

8. An arrangement (120), comprising:
a measuring element (100) according to any one of claims 1 to 7; and
a receiver device (122) communicably coupled or coupleable to the sensor (110) for receiving anchoring data detected by means of the sensor (110).

9. The arrangement (120) according to claim 8, wherein the receiver device (122) is designed for wirelessly communicating with the sensor (110).

10. The arrangement (120) according to claim 8 or 9, wherein the receiver device (122) is selected from a group consisting of a router, a computer and a portable user terminal, in particular a smartphone or a tablet.

11. The arrangement (120) according to any one of claims 8 to 10, comprising the anchoring ground (177) with an anchoring blind hole (189) in which the measuring element (100) is at least partially anchored.

12. A method for manufacturing a measuring element (100), wherein the method comprises:
forming a first fastening end (104), for anchoring in an anchoring ground (177), at a first end of a shaft portion (102) provided with at least one fastening thread (116, 118);
arranging a sensor (110) at a distance from the at least one fastening thread (116, 118) on the measuring element (100) for detecting anchoring data of the measuring element (100) in the anchoring ground (177), wherein the sensor (110) is arranged at a radially tapered tapering portion (108) of the shaft portion (102), wherein the radially tapered tapering portion (108) is formed as an annular recess at a radially outer side of the shaft portion (102);
forming a transmission device (114) for transmitting the anchoring data from the sensor (110) to an external receiver device (122); and
forming a protection device (112) for protecting the sensor (110), **characterized in that**
the protection device (112) is arranged in a circumferentially closed manner in the radially tapered tapering portion (108) and protectively covers the sensor (110).

## Revendications

1. Élément de mesure (100), présentant :
une partie tige (102) avec au moins un filetage de fixation (116, 118) ;
une première extrémité de fixation (104) au niveau d'une première extrémité de la partie tige (102), en vue d'une fixation dans un fond d'ancrage (177) ;
un capteur (110) agencé à distance du filetage de fixation (116, 118) et permettant d'enregistrer des données d'ancrage de l'élément de mesure (100) dans le fond d'ancrage (177), dans lequel le capteur (110) est agencé au niveau d'une section de rétrécissement (108) radialement rétrécie de la partie tige (102), dans lequel la section de rétrécissement (108) radialement rétrécie est réalisée sous la forme d'un évidement annulaire sur un côté extérieur radial de la partie tige (102) ;
un dispositif de transmission (114) permettant de transmettre les données d'ancrage du capteur (110) vers un appareil récepteur externe (122) ; et
un dispositif de protection (112) permettant de protéger le capteur (110),
**caractérisé en ce que**
le dispositif de protection (112) est agencé de manière périphériquement fermée dans la section de rétrécissement (108) radialement rétrécie et recouvre le capteur (110) de manière protectrice.

2. Élément de mesure (100) selon la revendication 1, dans lequel la première extrémité de fixation (104) présente au moins un filetage de fixation (116) du au moins un filetage de fixation (116, 118).

3. Élément de mesure (100) selon la revendication 1 ou 2, présentant une deuxième extrémité de fixation (106) se trouvant au niveau d'une deuxième extrémité, opposée à la première extrémité, de la partie tige (102) et qui, à l'état ancré dans le fond d'ancrage (177), doit être fixée au niveau d'un côté extérieur du fond d'ancrage (177) ou dans le fond d'ancrage (177), dans lequel le au moins un filetage de fixation (116, 118) présente un filetage extérieur (118), en particulier un filetage extérieur métrique, au niveau de la deuxième extrémité de fixation (106).

4. Élément de mesure (100) selon la revendication 3, dans lequel la première extrémité de fixation (104) présente au moins un filetage de fixation (116) du au moins un filetage de fixation (116, 118).

5. Élément de mesure (100) selon l'une quelconque des revendications 1 à 4, dans lequel le capteur (110) est agencé côté enveloppe sur la partie tige (102).

6. Élément de mesure (100) selon l'une quelconque des revendications 1 à 5, présentant au moins une des caractéristiques ci-dessous :
le dispositif de transmission (114) présente au moins un câble de transmission qui est agencé au moins par sections de manière à courir le long de la partie tige (102) ;
le dispositif de transmission (114) est conçu pour transmettre sans fil des données d'ancrage, en particulier au moyen d'au moins une technologie issue d'un groupe comprenant Near Field Communication, Bluetooth, Wireless Local Area Network, Narrowband Internet of Things, Long Term Evolution et Low Power Wide Area Network ;
le capteur (110) est conçu pour enregistrer au moins un paramètre issu d'un groupe comprenant tension en traction, allongement, couple et température ;
le capteur (110) présente une jauge de déformation ;
présentant au moins un autre capteur (110) permettant d'enregistrer d'autres données d'ancrage de l'élément de mesure (100) dans le fond d'ancrage (177) ;
le dispositif de protection (112) présente un matériau compressible, en particulier une mousse compressible ;
le dispositif de protection (112) présente un matériau imperméable à l'humidité, en particulier une mousse imperméable à l'humidité ;
le dispositif de protection (112) est conçu pour protéger le capteur (110) contre des forces s'exerçant à plat sur l'enveloppe, du fond d'ancrage (177) jusque sur la section de rétrécissement (108) ;
le dispositif de protection (112) est agencé dans la section de rétrécissement (108) radialement rétrécie jusqu'à une hauteur radiale telle que le dispositif de protection (112) ne dépasse pas radialement de la partie tige (102), en particulier arrive au ras de la partie tige (102) ;
le dispositif de protection (112) présente au moins une rampe de protection (154) agencée derrière le capteur (110) de manière périphérique par rapport à une direction de vissage (170) de l'élément de mesure (100), en particulier au moins partiellement dans la section de rétrécissement (108) radialement rétrécie.
le au moins un filetage de fixation (116, 118) présente un filetage d'ancrage (116) au niveau de la première extrémité de fixation (104), en particulier un filetage de vis à béton, un filetage de vis à bois ou un filetage métrique ;
réalisé sous la forme d'une vis à bois ;
réalisé sous la forme d'une vis à béton ;
réalisé sous la forme d'un boulon d'ancrage, en particulier sous la forme d'une ancre à béton
réalisé sous la forme d'une tige d'ancrage, en particulier pour une cheville chimique ;
réalisé sous la forme d'une cheville en plastique, en particulier destinée à une vis à bois ;
le capteur (120) est conçu pour enregistrer des données d'ancrage qui contiennent des informations relatives et/ou des informations absolues concernant un paramètre de mesure.

7. Élément de mesure (100) selon l'une quelconque des revendications 1 à 6, présentant au moins une section de prolongement (195) allongée qui s'étend à partir d'au moins une parmi la première extrémité de fixation (104) de la partie tige (102) et la deuxième extrémité de fixation (106) de la partie tige (102) jusqu'à une extrémité de l'élément de mesure (100).

8. Agencement (120), présentant :
un élément de mesure (100) selon l'une quelconque des revendications 1 à 7 ; et
un appareil récepteur (122) qui est couplé, ou peut être couplé, de manière à pouvoir communiquer avec le capteur (110) afin de recevoir des données d'ancrage enregistrées au moyen du capteur (110).

9. Agencement (120) selon la revendication 8, dans lequel l'appareil récepteur (122) est conçu pour communiquer sans fil avec le capteur (110).

10. Agencement (120) selon la revendication 8 ou 9, dans lequel le dispositif récepteur (122) est sélectionné dans un groupe comprenant un routeur, un ordinateur et un terminal utilisateur portable, en particulier un smartphone ou une tablette.

11. Système (120) selon l'une quelconque des revendications 8 à 10, présentant le fond d'ancrage (177) avec un trou borgne d'ancrage (189) dans lequel l'élément de mesure (100) est au moins partiellement ancré.

12. Procédé de fabrication d'un élément de mesure (100), dans lequel le procédé comprend les étapes consistant à :
former une première extrémité de fixation (104), en vue d'un ancrage dans un fond d'ancrage (177), au niveau d'une première extrémité d'une partie tige (102) munie d'au moins un filetage de fixation (116, 118) ;
agencer, au niveau de l'élément de mesure (100), un capteur (110) se trouvant à distance du au moins un filetage de fixation (116, 118), afin d'enregistrer des données d'ancrage de l'élément de mesure (100) dans le fond d'ancrage (177), dans lequel le capteur (110) est agencé au niveau d'une section de rétrécissement (108) radialement rétrécie de la partie tige (102), dans lequel la section de rétrécissement (108) radialement rétrécie est réalisée sous la forme d'un évidement annulaire sur un côté extérieur radial de la partie tige (102) ;
réaliser un dispositif de transmission (114) permettant de transmettre les données d'ancrage du capteur (110) vers un appareil récepteur externe (122) ; et
réaliser un dispositif de protection (112) permettant de protéger le capteur (110), **caractérisé en ce que**
le dispositif de protection (112) est agencé de manière périphériquement fermée dans la section de rétrécissement (108) radialement rétrécie et recouvre le capteur (110) de manière protectrice.
